(19) Europäisches Patentamt
European Patent Office
Office européen des brevets

(11) **EP 4 718 125 A1**

(12) **EUROPEAN PATENT APPLICATION**

(43) Date of publication:
01.04.2026 Bulletin 2026/14

(21) Application number: 25203264.4

(22) Date of filing: 19.09.2025

(51) International Patent Classification (IPC):
G02B 1/113 (2015.01)    G02B 1/115 (2015.01)
G02B 1/12 (2006.01)    G02B 1/14 (2015.01)
G02B 1/18 (2015.01)

(52) Cooperative Patent Classification (CPC):
G02B 1/18; G02B 1/113; G02B 1/115; G02B 1/12;
G02B 1/14

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.09.2024 JP 2024169032

(71) Applicant: KONICA MINOLTA, INC.
Tokyo 100-7015 (JP)

(72) Inventor: TADA, Kazunari
Tokyo, 100-7015 (JP)

(74) Representative: MFG Patentanwälte
Meyer-Wildhagen Meggle-Freund
Gerhard PartG mbB
Amalienstraße 62
80799 München (DE)

(54) **FUNCTION FILM, FUNCTION FILM PRODUCING METHOD, OPTICAL COMPONENT, OPTICAL DEVICE, AND INKJET HEAD**

(57) Disclosed is a function film (100) that is a water-repellent film, the function film including at least a water-repellent layer (34) and an unevenness layer (31). The water-repellent layer has a surface on which a first water-repellent material and a second water-repellent material are exposed, and the unevenness layer contains an inorganic substance as a main component and has a fine unevenness structure.

## FIG. 5

**Description**

BACKGROUND OF THE INVENTION

TECHNICAL FIELD

The present invention relates to a function film, a function film producing method, an optical component, an optical device, and an inkjet head.

DESCRIPTION OF RELATED ART

A water-repellent film excellent in rubbing resistance has not existed so far. When the initial contact angle is about 110 degrees, the deterioration of the contact angle is 10 degrees or less even when rubbed. However, as disclosed in Japanese Patent No. 5716679, for example, a water-repellent film having an initial contact angle of more than 130 degrees usually deteriorates in contact angle by 10 degrees or more after a rubbing test.

The reasons for this include the following two points. (I) Since the water-repellent film utilizes an unevenness structure, the brittleness of the structure causes the deterioration of the contact angle. (ii) In order to form a water-repellent film, it is necessary to carefully control the pitch, depth, size, and the like of the unevenness structure. It is difficult to simultaneously satisfy the requirements (I) and (ii) for improvement, and a water-repellent film having high abrasion resistance has not been realized.

In particular, in the optical use and the metal mold use, it is necessary to accurately process the unevenness having an invisible size into a shape which is not broken and has a property of repelling water, and therefore, the degree of difficulty is higher. Furthermore, in terms of mass productivity and cost, lithography or nanoimprinting, which requires processing on a sheet-by-sheet basis, is not suitable.

SUMMARY OF THE INVENTION

The present invention has been made in consideration of the above-mentioned problems and situations. The problem to be solved is to provide a function film capable of achieving both rubbing resistance and water repellency, and a producing method of a function film. Another object of the present invention is to provide an optical component, an optical device, an inkjet head, and a mold, each having the function film.

To achieve at least one of the above objectives, according to an aspect of the present disclosure, a function film reflecting one aspect of the present disclosure is a function film that is a water-repellent film, the function film comprising at least a water-repellent layer and an unevenness layer, wherein

the water-repellent layer has a surface on which a first water-repellent material and a second water-repellent material are exposed, and
the unevenness layer contains an inorganic substance as a main component and has a fine unevenness structure.

BRIEF DESCRIPTION OF THE DRAWINGS

The advantages and features provided by one or more embodiments of the invention will become more fully understood from the detailed description given hereinafter and the appended drawings which are given by way of illustration only, and thus are not intended as a definition of the limits of the present disclosure, and wherein:

Fig. 1 is a schematic cross-sectional schematic diagram illustrating an example of the basic configuration of a function film;
Fig. 2 is a schematic cross-sectional schematic diagram illustrating an example of a basic configuration of an unevenness layer;
Fig. 3 is a schematic cross-sectional schematic diagram illustrating an example of the basic configuration of the unevenness layer;
FIG. 4 is a upper surface view showing an example of a basic configuration of the unevenness layer;
FIG. 5 is a perspective view showing an example of a basic configuration of the unevenness layer;
FIG. 6 is a diagram for explaining a method of calculating an average diameter in the uppermost stage, and is a screen showing an example of an operation of photographed image analysis by an electron microscope;
FIG. 7 is a diagram for explaining a method of calculating an average diameter in the uppermost stage, and is a screen showing an example of an operation of photographed image analysis by an electron microscope;
FIG. 8 is a diagram for explaining a method of calculating an average diameter in the uppermost stage, and is a screen showing an example of an operation of photographed image analysis by an electron microscope;

FIG. 9 is a diagram for explaining a method of calculating the ratio of the surface area in the uppermost stage, and is a screen showing an example of an operation of photographed image analysis by an electron microscope;

FIG. 10 is a diagram for explaining a method of calculating the ratio of the surface area in the uppermost stage, and is a screen showing an example of an operation of photographed image analysis by an electron microscope;

FIG. 11 is a diagram for explaining a method of calculating the ratio of the surface area in the uppermost stage, and is a screen showing an example of an operation of photographed image analysis by an electron microscope;

FIG. 12 is a view for explaining a method of calculating the ratio of the surface area in the uppermost stage, and is a view showing an example of a captured image by an atomic force microscope;

FIG. 13 is a view for explaining a method of calculating the ratio of the surface area in the uppermost stage, and is a view showing an example of binarized data by an atomic force microscope;

FIG. 14 is a diagram for explaining a method of calculating the ratio of the surface area in the uppermost stage, and is a screen showing an example of an operation of analyzing a photographed image by an atomic force microscope;

FIG. 15 is a view for explaining a method of calculating the ratio of the surface area in the uppermost stage, and is a screen showing an example of an operation of analyzing a photographed image by an atomic force microscope;

FIG. 16 is a diagram for explaining a method of calculating the ratio of the surface area in the uppermost stage, and is a screen showing an example of an operation of analyzing a photographed image by an atomic force microscope;

FIG. 17 is a diagram for explaining a method of calculating the ratio of the surface area in the uppermost stage, and is a screen showing an example of an operation of the captured image analysis by the atomic force microscope;

FIG. 18 is a diagram for explaining a method of calculating the ratio of the surface area in the uppermost stage, and is a screen showing an example of an operation of analyzing a photographed image by an atomic force microscope;

FIG. 19 is a view for explaining a method of calculating the ratio of the surface area in the uppermost stage, and is a screen showing an example of an operation of analyzing a photographed image by an atomic force microscope;

FIG. 20 is a view for explaining a method for calculating the ratio of the surface area in the uppermost stage, and is a screen showing an example of an operation for analyzing a photographed image by an atomic force microscope;

FIG. 21 is a view for explaining a method of calculating the ratio of the surface area in the uppermost stage, and is a screen showing an example of an operation of analyzing a photographed image by an atomic force microscope;

FIG. 22 is a view for explaining a method for calculating the ratio of the surface area in the uppermost stage, and is a screen showing an example of an operation for analyzing a photographed image by an atomic force microscope;

FIG. 23 is a view for explaining a method for calculating the ratio of the surface area in the uppermost stage, and is a screen showing an example of an operation for analyzing a photographed image by an atomic force microscope;

Fig. 24 is a flowchart of a producing method of a function film;

Fig. 25 is a flowchart of an unevenness layer forming step;

Fig. 26 is a step chart illustrating an example of an unevenness layer forming step;

Fig. 27 is a flowchart of a water-repellent layer forming step;

Fig. 28 is a photograph of the function film when viewed from directly above;

FIG. 29 is a photograph of the function film as viewed obliquely from above at 30 degrees;

Fig. 30 is a photograph of the function film as viewed from obliquely upward at 45 degrees;

Fig. 31 is a photograph of the function film when viewed from obliquely upward at 30 degrees;

Fig. 32 is a photograph of the function film when viewed from directly above;

Fig. 33 is a photograph of the function film when viewed from obliquely upward at 30 degrees; and

FIG. 34 is a schematic diagram of a function film for explaining a radius of curvature R and a taper angle $\theta_T$.

DETAILED DESCRIPTION

Hereinafter, one or more embodiments of the present disclosure will be described with reference to the drawings. However, the scope of the invention is not limited to the disclosed embodiments.

The function film of the embodiments is a water-repellent film including at least a water-repellent layer and an unevenness layer. The first water-repellent material and the second water-repellent material are exposed on a surface of the water-repellent layer. The unevenness layer contains an inorganic substance as a main component and has a fine unevenness structure. The above is the characteristic.

This characteristic is a technical feature common to or corresponding to the following embodiments.

In a vertical cross-sectional shape in a thickness direction of the unevenness layer, it is preferable that the protruding portion in the unevenness layer has a stepped shape with one stage or a plurality of stages, and an uppermost stage of the protruding portion in the unevenness layer has a rounded shape or a tapered shape at a tip end portion according to the present embodiment. Thus, both rubbing resistance and water repellency of the function film can be sufficiently achieved.

In the present embodiment, it is preferable that in a vertical cross-sectional shape in a thickness direction of the unevenness layer, the protruding portion in the unevenness layer has a stepped shape with a plurality of stages, and when the unevenness layer is viewed in top plan, the uppermost stage of the protruding portion in the unevenness layer has an island-like structure, and the lowermost stage has a mesh-like structure. Thus, both rubbing resistance and water repellency of the function film can be sufficiently achieved.

In the present embodiment, the unevenness layer preferably contains $SiO_2$ as a main component. Thus, the function film can be applied to an optical component.

In the present embodiment, the first water-repellent material preferably contains a fluorine-based material, and the second water-repellent material preferably contains a silicon-based material. Thus, both rubbing resistance and water repellency of the function film can be sufficiently achieved.

In the present embodiment, an elemental ratio of fluorine to silicon on the surface of the water-repellent layer is preferably within a range of 99:1 to 50:50. Thus, both rubbing resistance and water repellency of the function film can be sufficiently achieved.

In the present embodiment, it is preferable that a high-hardness layer is provided between the water-repellent layer and the unevenness layer, and the hardness of the high-hardness layer is higher than the hardness of the unevenness layer. Thus, the rubbing resistance of the function film can be improved.

In the present embodiment, the high-hardness layer preferably contains an inorganic substance having a Mohs hardness of 9 or more or a hardness higher than that of $SiO_2$. Thus, the rubbing resistance of the function film can be improved.

In the present embodiment, it is preferable that a slip-down layer is provided between the water-repellent layer and the unevenness layer. Thus, fogging of the function film can be prevented. In addition, both the rub resistance and the water repellency of the function film can be sufficiently achieved.

In the present embodiment, the contact angle of water at 23°C is preferably 130 degrees or more. Thus, the water repellency of the function film can be improved.

A producing method of a function film of the present invention is a producing method of the function film, comprising: a step of forming the unevenness layer; and a step of forming the water-repellent layer. The step of forming the water-repellent layer includes a step of applying the first water-repellent material onto the unevenness layer, and a step of applying the second water-repellent material onto the unevenness layer before the layer of the first water-repellent material is formed.

In the present embodiment, it is preferable that the step of forming the unevenness layer includes a step of rounding corners of a plurality of protruding portions included in the fine unevenness structure. Thus, both rubbing resistance and water repellency of the function film can be sufficiently achieved.

An optical component of the present invention includes the function film.

An optical device of the present invention includes the optical component.

The inkjet head of the present invention includes the function film.

A mold according to the present invention includes the function film.

Hereinafter, one or more embodiment of the present invention will be described with reference to the drawings. However, the scope of the present invention is not limited to the disclosed embodiment.

In the present description, when two figures are used to indicate a range of value before and after "to", these figures are included in the range as a lower limit value and an upper limit value.

1 Outline of function film

The function film of the present embodiment is a water-repellent film comprising at least a water-repellent layer and an unevenness layer, wherein a first water-repellent material and a second water-repellent material are exposed on the surface of the water-repellent layer, and the unevenness layer contains an inorganic substance as a main component and has a fine unevenness structure.

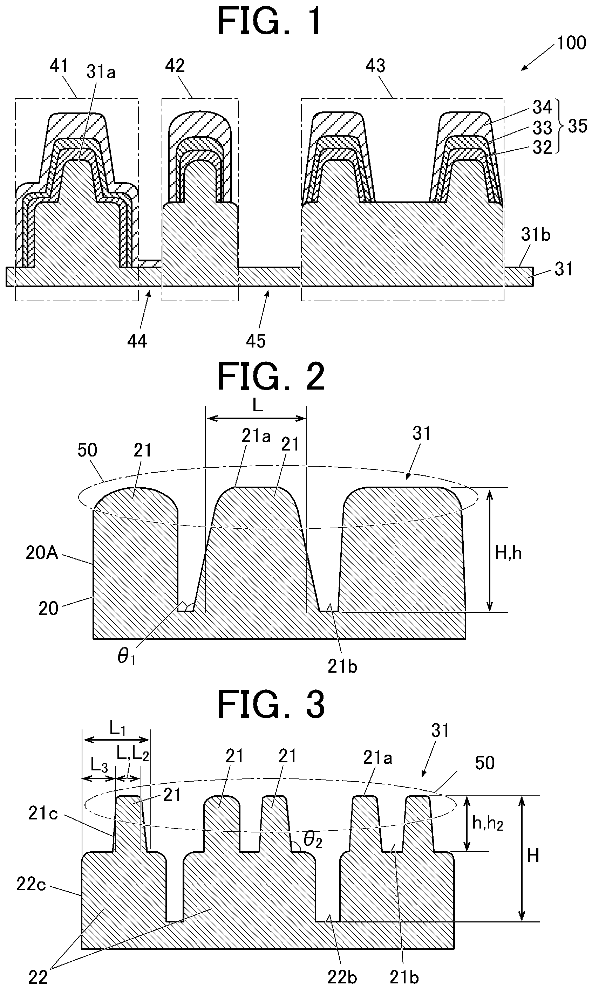

Fig. 1 is a schematic cross-sectional schematic diagram illustrating an example of a basic configuration of a function film. Specifically, it is a vertical cross-sectional schematic diagram in the thickness direction of the function film 100. The function film 100 includes the unevenness layer 31 and the surface adjustment layer 35. The surface adjustment layer 35 is a generic term for layers coated with various materials to adjust the function of the surface of the unevenness layer 31, and includes the water-repellent layer 34. The surface adjustment layer 35 may include any functional layer such as the high-hardness layer 32 and the slip-down layer 33 in addition to the water-repellent layer 34. In a case where the surface adjustment layer 35 includes the high-hardness layer 32, the slip-down layer 33, and the water-repellent layer 34, it is preferable to provide the layers in the order of the unevenness layer 31, the high-hardness layer 32, the slip-down layer 33, and the water-repellent layer 34. Any functional layer such as a reflectance adjustment layer (not illustrated) may be provided under the unevenness layer 31, that is, on the side of the flat surface on which the fine unevenness structure is not formed.

The function film of the present embodiment can have both abrasion resistance and water repellency by including the water-repellent layer 34 and the unevenness layer 31. Furthermore, the effect can be enhanced by further providing the high-hardness layer 32, the slip-down layer 33, and the like.

In the present embodiment, the "protruding portion" refers to a portion protruding upward from the reference plane, and the "recess portion" refers to a portion other than the protruding portion. Hereinafter, in the description of the entire function film, the "protruding portion" refers to the entire portion from the bottommost surface 31b of the unevenness layer 31 to the water-repellent layer 34 protruding upward. Furthermore, in the description of the unevenness layer, the term "protruding portion" refers to a portion from the bottommost surface 31b of the unevenness layer 31 to the uppermost surface 31a of the unevenness layer 31 protruding upward. Note that in the present embodiment, the face on the side (surface side) where the function of water repellency is exhibited is defined as the top or upper surface, and the face on the opposite side is defined as the bottom surface.

The surface adjustment layer 35 may cover the entire surface of the function film 100, as illustrated in the first protruding portion 41 and the first recess portion 44. Furthermore, the surface adjustment layer 35 may cover only a portion close to the surface of the function film 100 as illustrated in the second protruding portion 42, the third protruding portion 43, and the second recess portion 45, and the unevenness layer 31 may be exposed in a portion far from the surface of the function film 100.

Details of each layer included in the function film will be described below.

2 Unevenness layer

The fine unevenness structure in the function film is mainly formed of the unevenness layer. Hereinafter, the details of the unevenness layer will be described. Note that in Fig. 1, the surface adjustment layer 35 has a certain thickness (height), but is actually extremely thin as compared with the thickness (height) of the protruding portions in the unevenness layer 31. Therefore, the fine unevenness structure in the unevenness layer 31 is not eliminated by the application of the surface adjustment layer 35 and is maintained.

In the present embodiment, the "fine unevenness structure" refers to a structure having a plurality of fine uneven shapes to the extent that a water-repellent action can be exhibited. Specifically, the unevenness structure refers to an unevenness structure in which at least the average height of the protruding portion of the unevenness layer is 1 $\mu$m or less, that is, in other words, the average depth of the recess portions of the unevenness layer is 1 $\mu$m or less, with reference to the standard of the bottommost base of the recess portions of the unevenness layer. Hereinafter, in the description of the unevenness layer, "the protruding portion in the unevenness layer" are also simply referred to as "protruding portion".

Fig. 2 and Fig. 3 are schematic sectional schematic diagrams illustrating an example of the basic configuration of the unevenness layer. That is, Figs. 2 and 3 are schematic vertical cross-sectional schematic diagrams in the thickness direction of only the unevenness layer 31 extracted from the function film 100. The unevenness layer 31 has a fine unevenness structure on one surface. In a vertical cross-sectional shape in the thickness direction, the protruding portion of the fine unevenness structure has a stepped shape with one stage or a plurality of stages.

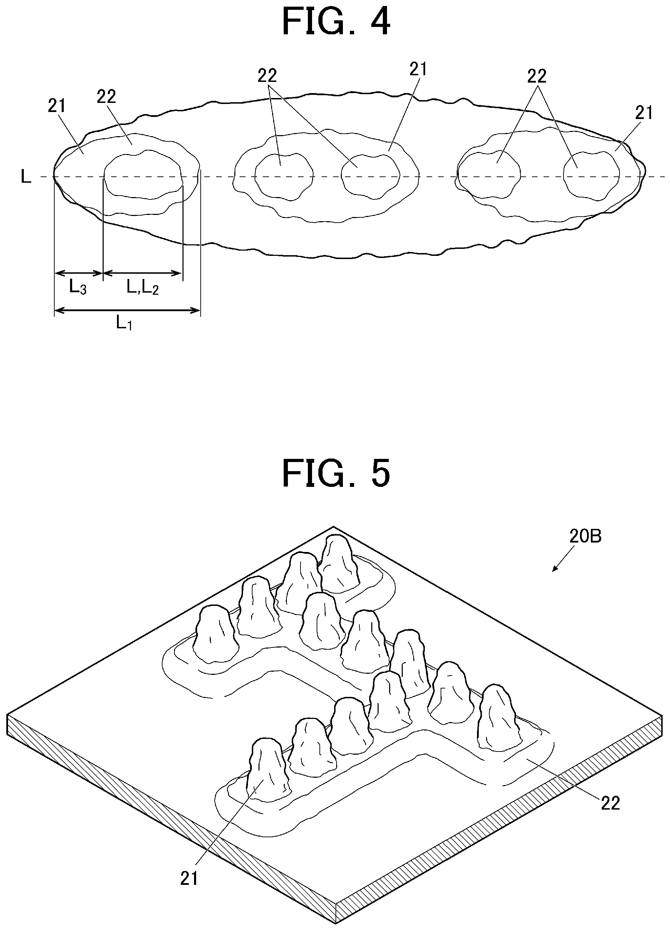

Fig. 4 is a top view illustrating an example of the basic configuration of the unevenness layer, that is, a top view of only the unevenness layer 31 extracted from the function film 100. Fig. 4 is a top plan view of the unevenness layer 31 illustrated in Fig. 3, and Fig. 3 corresponds to a vertical cross-sectional view taken along line L in Fig. 4.

Hereinafter, characteristics when the unevenness layer is viewed from a vertical cross section in the film thickness direction and when the unevenness layer is viewed from above (top plan view) will be described.

(1) unevenness layer structure (1.1) Shape of entire protruding portion as viewed from vertical cross section

(11.1) stage shape

In the present embodiment, the term "stepped with one stage or a plurality of stages" refers to a stage that is greater than or equal to 10 nm in distance of a substantially horizontal surface portion. For example, in the case of one stage, the average diameter L in Fig. 2 corresponds to the distance of the substantially horizontal surface portion, and in the case of a plurality of stages, $L_3$ in Fig. 3 corresponds to the distance of the substantially horizontal surface portion. The distance of the substantially horizontal surface portion is preferably 30 nm or more, and more preferably within a range of 50 to 500 nm.

In the present embodiment, when the number of stages is defined as n in the stages of the protruding portion, the stages are defined as a first stage and a second stage in order from the uppermost stage, and the lowermost stage is defined as an n-th stage. For example, in Fig. 3, the stage of the protruding portion is two stages, and includes a first stage 21 (uppermost stage) and a second stage 22 (lowermost stage).

The determination of whether or not "in a vertical cross-sectional shape in the thickness direction, the plurality of protruding portions included in the fine unevenness structure have a stepped shape with one stage or a plurality of stages" and the confirmation of the shape are performed by the following methods. It can be determined and confirmed by a method of observing the cross-sectional shape of a three dimensional image obtained by measurement with an atomic force microscope (AFM) under the conditions described later, or a method of observing the cross section of the function film with an electron microscope. These methods may be used in combination. Alternatively, the cross section of the protruding portion may be observed with a scanning electron microscope (SEM) or a transmission electron microscope (TEM).

The angle formed by the substantially horizontal surface portion of the staircase and the direction of the slope of the stage, that is, the angle $\theta_1$ in Fig. 2 in the case of a single stage and the angle $\theta_2$ in Fig. 3 in the case of a plurality of stages is within a range of 90 to 150 degrees, and preferably within a range of 100 to 140 degrees. In the present embodiment, each stage of the staircase is preferably tapered, and a taper angle $\theta_T$ of each stage is preferably in a range of 30 to 80 degrees. The taper angle $\theta_T$ represents an angle in the slope direction of the stage of the staircase.

(11.2) Total Average Height of protruding portions

As will be described in more detail later, the fine unevenness structure of the unevenness layer is preferably formed by etching after formation of an inorganic substance layer having a uniform thickness. In the present embodiment, before and during the formation of the fine unevenness structure is referred to as an "inorganic substance layer", and after the formation is referred to as an "unevenness layer". In a case where the fine unevenness structure is formed by etching, "the average height of the protruding portion when the bottommost surface of the recess portion is set as a standard" corresponds to the total depth of etching when the recess portion is formed by etching. Note that "the average height of the protruding portion with reference to the bottommost surface of the recess portions" is also referred to as "total average height H".

For example, when the number of stages of the protruding portion is one, as shown in FIG. 2, the distance from the bottom surface 21b of the first stage to the top surface 21a of the first stage is referred to as the total average height H. When the number of stages of the protruding portion is two, as shown in FIG. 3, the distance from the bottom surface 22b of the second stage to the 21a of the upper surface of the first stage is referred to as a total average height H.

The total average height H is 1 $\mu$m or less, and preferably within a range of 0.05 to 0.25 $\mu$m.

The total average height H is calculated by measuring image data of the unevenness layer using an atomic force microscope (AFM) and using software manufactured by BRUKER from the measured image data. Specifically, any vertical cross section of 1 $\mu$m or more in the film thickness direction is analyzed, and the distance between a plane having a height at which the number of data (frequency) is largest on the uppermost surface side and a plane having a depth at which the number of deepest data is largest is calculated. This distance is analyzed in ten arbitrary cross sections, and the arithmetic average value thereof is defined as the total average height H.

Although details will be described later, the total average height H can be set to 1 $\mu$m or less by controlling the thickness of the inorganic substance layer, the thickness of the metal mask, the film formation temperature of the metal mask, the etching time, and the like.

(12) Shape of Uppermost stage when Viewed from Vertical Cross Section

(12.1) Shape of tip end portion

In the present embodiment, the uppermost stage is rounded at its tip end portion. As illustrated in Figs. 2 and 3, the "tip end portion" refers to the upper end of the uppermost stage, and the tip end portion 50 includes the upper surface side 21a of the first stage. As will be described in detail later, a pin corner on an upper surface of the uppermost stage (first stage) is cut by isotropic etching in a producing step. Therefore, the uppermost stage is rounded and has a rounded shape. In addition, the side surface of the uppermost stage (first stage) is easily ground by etching, and a position is more easily ground as the position is closer to the uppermost surface. Therefore, the uppermost stage may have a tapered shape.

It is considered that since the pin angle is small and the tip end portion has a rounded shape, even when the function film is rubbed, the protruding portion is not easily caught and can be prevented from being broken and chipped. In addition, it is considered that, due to the tapered shape, a portion far from the tip end portion of the uppermost stage can be made relatively thick, and even when the function film is rubbed, the protruding portion can be prevented from being broken and chipped. Note that the "pin angle" herein means an unrounded angle of about 90 degree. The pin angle is an angle formed by anisotropic etching in a producing step which will be described later. The radius of curvature R of the rounded tip end portion is preferably within a range of 30 to 1000 nm. More desirably, it is 50 to 300 nm. The radius of curvature R can be calculated by observing a cross section of the protruding portion with an atomic force microscope (AFM) or a scanning electron microscope (SEM).

(12.2) Average height of uppermost stages

In the present embodiment, the "average height of the uppermost stage" refers to an average height from the bottom surface to the upper surface in the uppermost stage. When the number of stages of the protruding portion is one, as illustrated in Fig. 2, the average height h refers to a distance from a bottom surface 21b portion of the first stage to a top surface 21a portion of the first stage. When the number of stages of the protruding portion is one, the average height h and the total average height H coincide with each other. As shown in FIG. 3, the average height h is measured from the bottom surface 21b of the first stage to the distance of the upper surface 21a of the first stage when the number of stages of the protruding portion is two.

When the protruding portion has one stage, the average height h of the uppermost stage is preferably in the range of 10 to 250 nm, and more preferably in the range of 30 to 200 nm. When the number of stages of the protruding portion is two, the average height $h_2$ of the uppermost stage is preferably within a range of 10 to 150 nm, and more preferably within a range of 30 to 100 nm. When the number of stages of the protruding portion is three, the average height of the uppermost stage is preferably in the range of 10 to 100 nm, and more preferably in the range of 20 to 50 nm.

The average height h of the uppermost stage can be calculated by observing a cross section of the protruding portion with an atomic force microscope (AFM) or a scanning electron microscope (SEM).

The average height h of the uppermost stage is calculated by measuring image data of the unevenness layer using an atomic force microscope (AFM) and using software manufactured by BRUKER from the measured image data. Specifically, it is obtained by a difference between a peak of the number of data on the uppermost surface (upper surface of the first stage) side and a peak of the number of data thereunder. That is, in a case where the number of stairs is one, the bottom surface is the peak of the number of data thereunder, and in a case where the number of stairs is two, the bottom surface of the first stage (the upper surface of the second stage) is the peak of the number of data thereunder. Also in this case, the difference is calculated in ten arbitrary cross sections, and the arithmetic average value thereof is set as the average height h.

Although details will be described later, the average height h can be adjusted within the above range by controlling the thickness of the inorganic substance layer, the thickness of the metal mask, the film formation temperature of the metal mask, the etching time, and the like.

(13) Shape of protruding portion when Viewed from Above (1.3.1) island-like structure and mesh-like structure

When the unevenness layer is viewed in top plan, the uppermost stage of the protruding portion preferably has an island-like structure, and the lowermost stage preferably has a mesh-like structure.

Fig. 5 is a perspective view illustrating an example of the basic configuration of the unevenness layer, that is, a perspective view of only the unevenness layer 31 extracted from the function film 100. Note that Fig. 5 illustrates a case where the number of stages of the protruding portion is two, and the second stage 22 is the lowermost stage.

In the present embodiment, the "island-like structure" refers to a structure in which a plurality of island portions each having a relatively circular shape are observed when the first stage 21 is viewed in top plan. In comparison with this, the "mesh-like structure" means a structure in which, when the second stage 22 is viewed in top plan, a net part in which a plurality of island parts are continuously connected as seen in the first stage 21 is observed. In addition, in the mesh portion, when a major axis to be described later can be defined, the ratio of the major axis diameter to the minor axis diameter is 5 or more. In addition, the mesh portion includes a network form in which a major axis described later cannot be defined. Specifically, the mesh part includes a shape in which a plurality of shapes obtained by distorting an ellipse are further connected or branched. That is, "the uppermost stage has an island-like structure and the lowermost stage has a mesh-like structure" means that the uppermost stage has a structure in which the island portions of the uppermost stage are connected by the mesh portion of the lowermost stage.

By reducing the average diameter of the uppermost stage, water repellency can be improved. On the other hand, when the average diameter of the uppermost stage is decreased, the protruding portion is easily broken and chipped when the function film is rubbed. Therefore, it is considered that, by forming the lowermost stage to have a mesh-like structure, even when the average diameter of the uppermost stage is made small, the stress applied to the uppermost stage when the function film is rubbed can be dispersed to the mesh portion of the lowermost stage, and the protruding portion can be prevented from being broken and chipped.

(13.2) Ratio of major axis diameter to minor axis diameter

From the viewpoint of rubbing resistance, when the unevenness layer is viewed in top plan, the ratio of the major axis diameter to the minor axis diameter (major axis diameter/minor axis diameter) in each stage of the protruding portion is preferably 2 or more, and more preferably 5 or more. Furthermore, each stage of the protruding portion preferably has a shape obtained by bending a long and thin ellipse. For example, each stage of the protruding portion is preferably in a shape such as an L-shape or an S-shape rather than a perfect circle. Such a shape can prevent the protruding portion from being broken and chipped even when the function film is rubbed.

The major axis diameter and the minor axis diameter are obtained by observation with a scanning electron microscope (SEM) described later. In the present embodiment, the "major axis diameters of the respective stages of the protruding portion" refer to the diameters of the minimum circumscribed circles C1 drawn on the outer shape (edge) of the respective stages of the protruding portion when viewed in top plan. The "minor axis diameter in each stage of the protruding portion" refers to a diameter when the maximum inscribed circle C2 is drawn on the outer shape (edge) when each stage of the protruding portion is viewed in top plan.

The stage in which the ratio of the major axis diameter to the minor axis diameter is 2 or more may be the first stage or a second or subsequent stage in the stages of the protruding portion. When the ratio is 2 or more in any stage of the staircase, the rub resistance can be improved. From the viewpoint of rubbing resistance, the ratio is preferably 2 or more at the lowermost stage of the protruding portion.

(14) Shape of the uppermost stage when viewed from above

(14.1) average diameter of uppermost stage

The average of the diameters of the uppermost stage is preferably in a range of 10 to 500 nm, and more preferably in a range of 50 to 200 nm.

The average diameter of the uppermost stage is determined by taking a photograph of the unevenness layer with an electron microscope and observing the photograph. In the present embodiment, the "average diameter of the uppermost stage" refers to an average diameter of an outer shape (edge) when the uppermost stage is viewed in top plan. For example, when the number of stages of the protruding portion is one as shown in FIG. 2, the average diameter of the uppermost stage refers to the average diameter L of the first stage 21 (uppermost stage). In addition, the average diameter of the uppermost stage refers to the average diameter L of the first stage 21 (uppermost stage) when the number of stages of the protruding portion is two as shown in FIG. 3. In practice, the uppermost stage often has a distorted shape, and therefore the arithmetic mean value of the major axis diameter and the minor axis diameter of the uppermost stage is preferably used as the diameter.

In the case where the number of stages of the protruding portion is two or more, the average diameter L of the first stage which is the uppermost stage is preferably smaller than the average diameter of the second and subsequent stages. That is, the protruding portion preferably has a shape tapered toward the upper portion. Thus, both rubbing resistance and water repellency can be sufficiently achieved.

For example, when the number of stages of the protruding portion is two as illustrated in Fig. 3, the average length L of the first stage is preferably in the range of 10 to 500 nm, and the average length of the second stage is preferably in the range of 100 to 1000 nm. When the number of stages of the protruding portions is three, the average length L of the first stage is preferably in a range of 10 to 500 nm, the average length of the second stage is preferably in a range of 100 to 600 nm, and the average length of the third stage is preferably in a range of 100 to 1000 nm.

The average diameter L can be adjusted to fall within the above range by controlling the thickness of the inorganic substance layer, the thickness of the metal mask, the film formation temperature of the metal mask, the etching time and the like, which will be described in detail later.

< Measurement method >

The average diameter of the uppermost stage can be calculated by the following sequence. First, a photograph of the unevenness layer viewed from above (top plan view) is taken by a scanning electron microscope (SEM) or a transmission electron microscope (TEM). The areas are calculated using image processing free software "ImageJ (ImageJ1. 32S, produced by Wayne Rasband)" for the captured image.

Hereinafter, a sequence of image analysis by a scanning electron microscope (SEM) will be described.

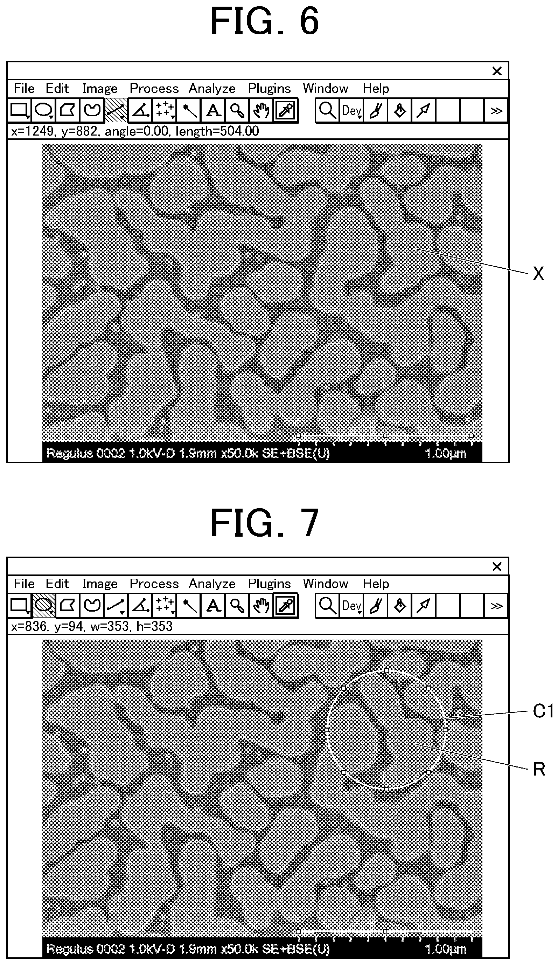

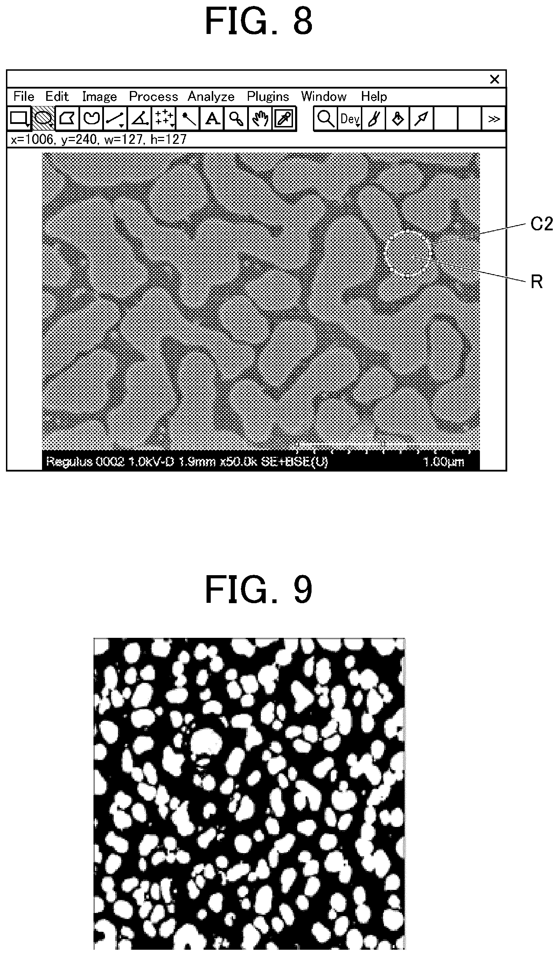

1) Download the free software ImageJ.
2) Image processing is performed according to the following sequence while maintaining the initial settings.
3) A surface SEM image of the unevenness layer, which is photographed in advance at a magnification of 30,000 times or more using a scanning electron microscope, is read into a personal computer using free software ImageJ.
4) Correlate the number of pixels with the physical length. For example, in FIG. 6, 1 $\mu$m is equal to 504 pixels.
5) Measure the major axis diameter.
As illustrated in Fig. 7, for a predetermined uppermost stage R, a minimum circumscribed circle C1 is drawn using a circle graphic tool. In this case, w = h = 353 represents the number of pixels indicating the radius (major axis radius) of the minimum circumscribed circle C1. In this case, the physical length is expressed in 353/504 = 0.700 $\mu$m.
6) Measure the minor axis diameter.
As illustrated in Fig. 8, for a predetermined uppermost stage R, a maximum inscribed circle C2 is drawn using a circle graphic tool. At that time, the above w = h = 127 is the number of pixels indicating the diameter (minor axis diameter) of the maximum inscribed circle C2. In this case, the physical length is expressed in 127/504 = 0.251 μm.
7) Calculate the average diameter.
The arithmetic mean value of the measured major axis diameter and minor axis diameter is calculated. To be specific, (0.700 + 0.251)/2 = 0.475 μm) is the radius of the predetermined uppermost stage R shown in FIGS. 7 and 8. The diameters of arbitrary 10 uppermost stages are calculated by the same method, and the arithmetic mean of the 10 diameters is defined as the average diameter.

(14.2) Surface area of uppermost stage

The ratio of the surface area of the uppermost stage to the surface area of the entire unevenness layer is preferably in a range of 30 to 70% and more preferably in a range of 30 to 55%.
In the present embodiment, the "ratio of the surface area of the uppermost stage to the surface area of the entire unevenness layer when the unevenness layer is viewed in top plan" refers to the ratio of the surface area of the uppermost stage to the surface area of the entire unevenness layer, that is, the sum of the surface areas of each of the protruding portions and the recess portions when the unevenness layer is viewed in top plan.
Although details will be described later, the ratio of the surface area of the uppermost stage can be adjusted within the above range by controlling the thickness of the inorganic substance layer, the thickness of the metal mask, the film formation temperature of the metal mask, the etching time, and the like.

< Measurement method >

The ratio of the surface area of the uppermost stage can be calculated by an image analysis method using an SEM or an image analysis method using an AFM. The value calculated by any one of the image analysis methods is preferably within the above-described range.
In the image analysis method using the SEM, first, a photograph of the unevenness layer viewed from above (top plan view) is taken by a scanning electron microscope (SEM). The photographed image is subjected to structural analysis using image processing free software "ImageJ (ImageJ1. 32S, produced by Wayne Rasband)" to calculate the Young's modulus.
In the image analysis method using an AFM, first, image data of the unevenness layer is measured using an atomic force microscope (AFM). The obtained AFM measurement image is binarized using software manufactured by BRUKER Corporation and calculated.

(SEM Image Analysis)

Hereinafter, a sequence of image analysis by a scanning electron microscope (SEM) will be described.

1) A surface SEM image of the unevenness layer, which is photographed in advance at a magnification of 30,000 times or more using a scanning electron microscope, is read into a personal computer using free software ImageJ.
Since the SEM image changes by adjustment of the focus, the contrast, and the brightness, it is preferable that the focus, the contrast, and the brightness are set to predetermined values.
2) Set the definition of black and white.
In the free software ImageJ, when the Black Background is checked, a luminance value of 0 is represented by black, and a luminance value of 255 is represented by white. When the Black Background is not checked, a luminance value of 0 is represented by white, and a luminance value of 255 is represented by black. Note that it is preferable to analyze a luminance value of 255 as white by putting a check mark.
3) Remove image noise.
Smoothing processing is performed.
4) Apply a bandpass filter.
The numerical value of the band-pass filter is preferably within a range of 20 to 100. Since the optimum value depends on the initial image, it is preferable to appropriately set the value to be optimum.
5) Binarize the image.
8-bit is set as a setting, and a threshold value is set. The threshold value is set as follows, and the bar is set at the right end such that the area of the bar above, that is, the area selected with green is 0%. The threshold value is adjusted until the Below bars, i.e. the areas selected in blue, overlap the black areas of the pores. Since this threshold value changes depending on the contrast of the image, it is preferable that the threshold value is not fixed but set by an analyst every time. Once the threshold value is determined, the image is converted to black and white.
FIG. 9 shows an example of a binarized image. Note that in the example illustrated in Fig. 9, the number of stages of the protruding portion is two. The white portion illustrated in Fig. 9 is the uppermost stage of the protruding portion. A black portion shown in FIG. 9 is an area of the unevenness layer excluding the uppermost stage (first stage), that is, the second and subsequent stages and the recess portion in the protruding portion.

6) ImageJ Is operated to call the histogram.

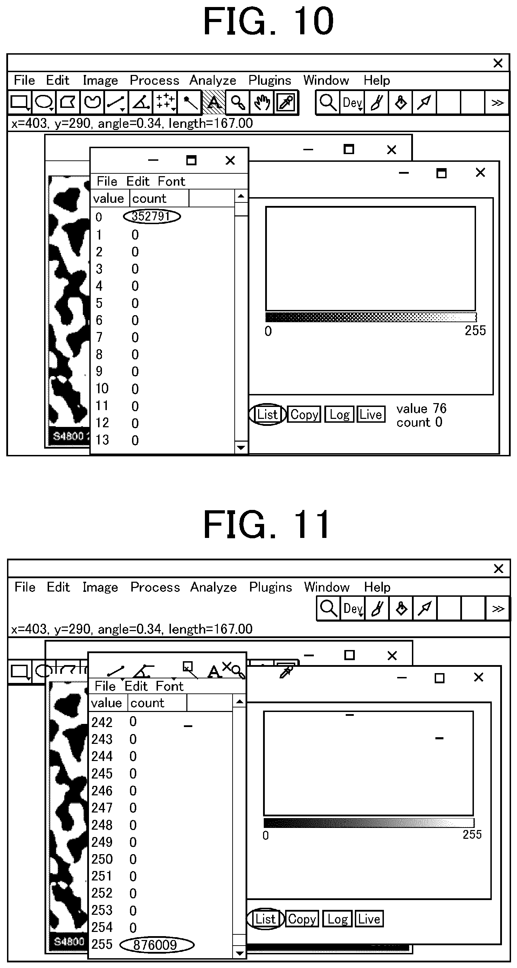

As shown in FIG. 10, when the List button is pressed to display the data of the histogram as a List, the number of pixels of each gradation is displayed. In the example shown in FIG. 10, the number of Value = 0, that is, the number of black pixels is 352791. The example illustrated in Fig. 11 indicates that the number of Value = 255 portions, that is, the number of white pixels is 876009.

7) Determine the area ratio.

The surface area of the uppermost stage corresponds to the number of white pixels. The surface area of the entire unevenness layer corresponds to the sum of the number of white pixels and the number of black pixels. The ratio of the surface area of the uppermost stage is expressed by the following formula (I).

$$\text{Formula (I): Ratio of surface area of uppermost stage}$$

$$= \text{number of white pixels/(number of white pixels + number of black pixels)}$$

In the example illustrated in Fig. 10 and Fig. 11, $\{876009/(352791 + 876009)\} \times 100 = 71\%$ is the proportion of the surface area of the uppermost stage.

Note that in a case where information at the time of measurement of the SEM image is included in the analysis image, it is preferable to perform image analysis through a step of, for example, excluding the information in advance so as not to affect the analysis.

(AFM Image Analysis)

Hereinafter, a sequence of image analysis by an atomic force microscope (AFM) will be described. The AFM is a kind of scanning probe microscope (SPM), and is a method of measuring a nano-level unevenness structure by utilizing an atomic force between a measurement sample and a stylus.

Specifically, in the AFM, a cantilever in which a sharp probe is attached to a tip of a minute spring plate is brought close to a distance of several nm from a sample surface, and unevenness of the sample is measured by an interatomic force acting between an atom at the tip of the probe and an atom of the sample. The AFM performs scanning while applying feedback to a scanner so that the interatomic force becomes constant, that is, the deflection of the cantilever becomes constant. By measuring the displacement amount fed back to the piezo scanner, the displacement of the Z axis, that is, the unevenness structure of the surface is measured.

If the stylus of the AFM does not enter the narrow groove of the recess portion, data as in the case where the number of stages is one is obtained even when the number of stages of the protruding portion is two. Therefore, as the needle of the AFM, a super-sharp or high-aspect-ratio cantilever is preferably selected as much as possible.

For example, as the AFM, "L-trace W" (manufactured by Hitachi High -Technologies Corporation) can be used, and as the probe, a silicon probe "SI-DF40P2" (manufactured by Hitachi High- Technologies Corporation) can be used.

A) Acquisition of Unevenness Image by AFM

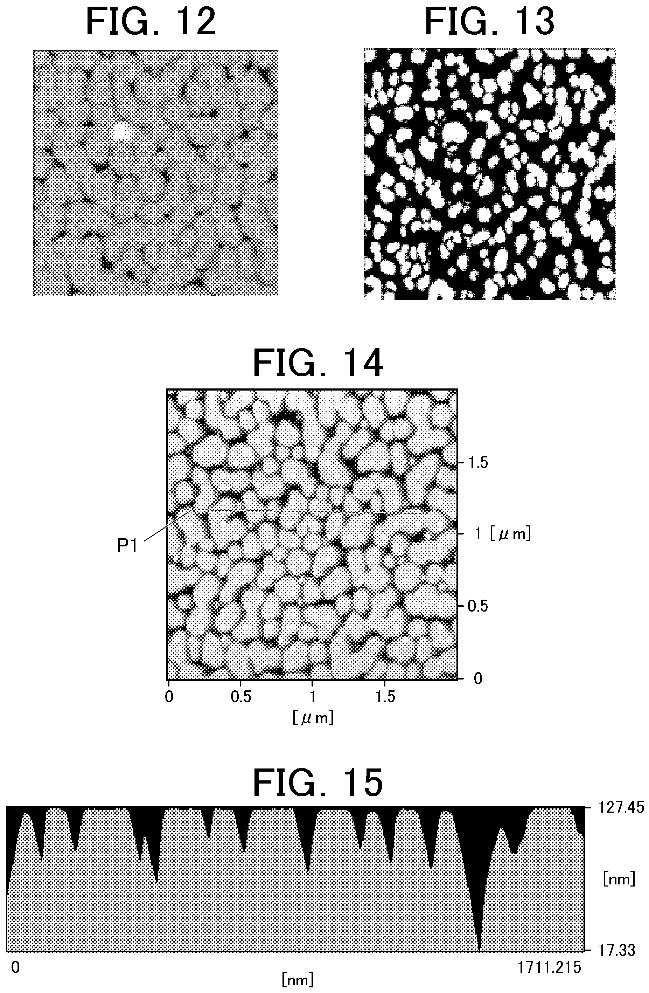

Three dimensional unevenness image data of the unevenness layer is measured using the AFM. FIG. 12 is an example of an AFM measurement image.

B) binarization of AFM Data

The obtained AFM measurement image is binarized using software manufactured by BRUKER. FIG. 13 shows data obtained by bInarizing the AFM measurement image shown in FIG. 12.

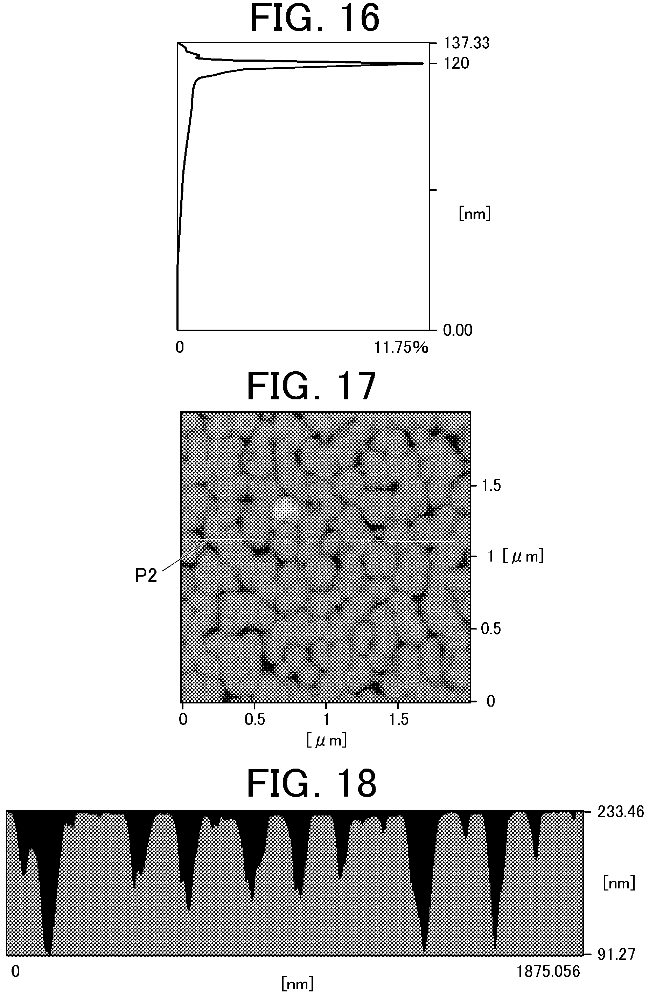

Fig. 14 is an AFM measurement image when the number of stages of a protruding portion is one. FIG. 15 is a cross-sectional profile at the section line P1 described in the AFM measurement image shown in FIG. 14. The horizontal axis indicates a scanning position. The vertical axis represents the distance from the deepest point when the deepest point of the AFM measurement image shown in FIG. 14 is set as a zero standard. Fig. 16 is a graph in which the AFM measurement images illustrated in Fig. 14 are plotted with the depth (the distance from the deepest point) on the vertical axis and the number of data at the depth on the horizontal axis.

When the number of stages is one, as shown in FIG. 16, peaks of the number of data appear on the uppermost surface and the bottommost surface of the protruding portion. In order to obtain the surface area of the uppermost stage, binarization (color editing) is performed with an intermediate point between the peak of the number of data pieces on the uppermost surface and the peak of the number of data pieces on the bottommost surface as a threshold value.

In the example shown in FIG. 16, the peak height of the number of peaks is a 120 nm from the bottommost surface to the uppermost surface of the protruding portion, and this position is the uppermost surface. An intermediate point (0nm) between a peak (120nm) of the number of pixels on the uppermost surface and a peak (60nm) of the number of pixels on the bottommost surface is used as a threshold value to perform binarization (color editing). Specifically, a point higher than the intermediate point height is displayed in white, and a point lower than the intermediate point height is displayed in black.

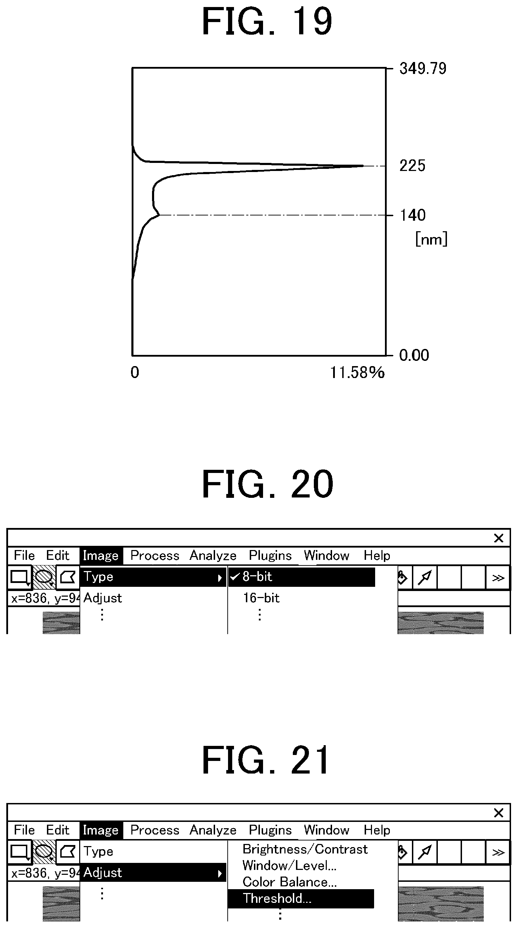

FIG. 17 is an AFM measurement image when the number of stages of the protruding portion is two. Fig. 18 is a cross-sectional profile taken along the section line P2 of the AFM measurement image illustrated in Fig. 17. The horizontal axis indicates a scanning position. The vertical axis represents a distance from the deepest point when the deepest point of the AFM measurement image shown in FIG. 17 is set as a zero standard. FIG. 19 is a graph in which the AFM measurement image shown in FIG. 17 is plotted with the depth (distance from the deepest point) on the vertical axis and the number of data at that depth on the horizontal axis.

In a case where the number of stairs is two, as illustrated in Fig. 19, peaks of the number of data appear on the upper surface of the first stage and the bottom surface of the first stage (the upper surface of the second stage). In order to obtain the surface area of the uppermost stage, in the first stage, binarization (color editing) is performed using an intermediate point between the peak of the number of data on the upper surface and the peak of the number of data on the bottom surface as a threshold value.

In the example illustrated in Fig. 19, from the bottommost surface to the topmost surface of the protruding portion, the peak heights of the number of peaks are the 225 nm and the 140 nm, the position of the 225 nm in height is the top surface of the first stage, and the position of the 140 nm in height is the bottom surface of the first stage. In the first stage, an intermediate point (182. 140 nm) between the peak (225nm) of the number of pixels on the top surface and the peak (5nm) of the number of pixels on the bottom surface is used as a threshold value to perform binarization (color editing). Specifically, a point higher than the intermediate point height is displayed in white, and a point lower than the intermediate point height is displayed in black.

Next, based on the binarized image, the ratio of the surface area of the uppermost stage is measured by the same method using the free software ImageJ which is the above-described image analysis software. Note that although binarization has already been completed by the above-described method, it is preferable to perform binarization processing even with image processing software. As shown in FIGS. 20 and 21, 8Bit processing is performed with predetermined settings, and binarization is performed using Threshhold = 128 as threshold value.

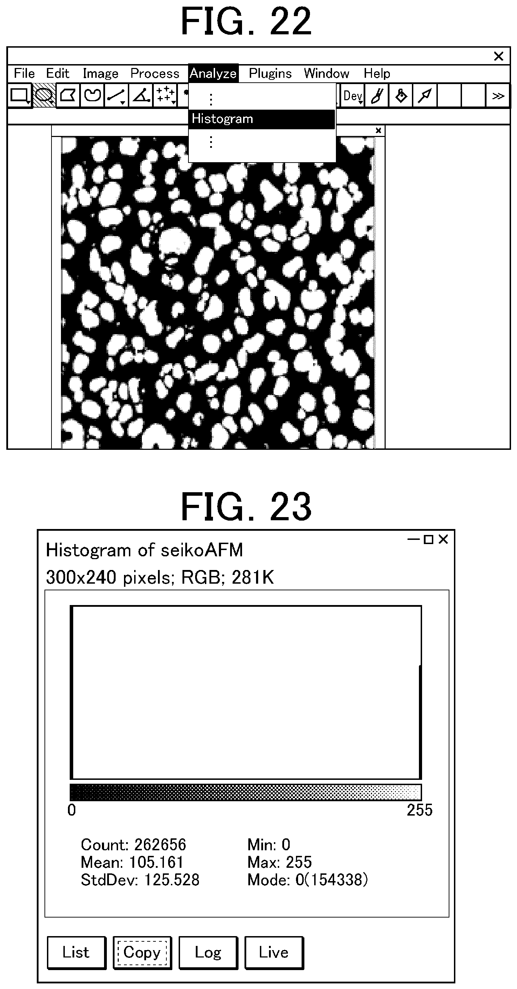

Next, as shown in FIGS. 22 and 23, a histogram of the binarized image of the AFM is created. The numbers of black and white data are each counted, and the ratio of the number of data in the uppermost stage (white) is obtained. In the example illustrated in Figs. 22 and 23, the ratio of the surface area of the uppermost stage is 41%.

(15) Randomness of protruding portion

It is preferable that the mutual positional relationship and the shapes of the plurality of protruding portions have randomness without regularity in identity or periodicity. Thus, the generation of diffracted light can be reduced.

In the present embodiment, "randomness" refers to a state in which there is no regularity such as overall identity, periodicity, or the like, and randomness or unpredictability is recognized with respect to the mutual positional relationship and shape of a plurality of protruding portions. Specifically, it refers to the state shown in an electron micrograph obtained in an example described later. In addition, since diffracted light is less likely to be generated when randomness is present, randomness can be determined from the presence or absence of diffracted light.

(2) Material of unevenness layer

In the present embodiment, the phrase "containing an inorganic substance as a main component" means that the ratio of the inorganic substance in all the components constituting the function film is 80 mass% or more. The ratio of the inorganic substance is preferably within a range of 90 to 99.9% by mass, and more preferably within a range of 97 to 100% by mass.

The type of the inorganic substance is not particularly limited. Examples of the main component inorganic substance include $SiO_2$, SiC, SiOC, and SiCN. $SiO_2$ The function film has high transparency and is suitably used for, for example, an optical device. A function film containing SiC, SiOC, or SiCN has high hardness and is suitably used for, for example, an inkjet head or a mold.

From the viewpoint of hardness, the unevenness layer preferably contains, in addition to the inorganic substance as a main component, an inorganic substance having a Mohs hardness of 9 or more, more preferably an inorganic substance having a Mohs hardness of 13 or more. The Mohs hardness used in the present embodiment is a modified Mohs hardness modified to 15 levels. The Mohs hardness of typical inorganic substances is listed below.

[Table 1]

TABLE I

| MODIFIED MOHS HARDNESS | STANDARD MINERAL NAME | CHEMICAL COMPOSITION | HARDNESS (HK) |
|---|---|---|---|
| 8 | QUARTZ CRYSTAL | $SiO_2$ | 820 |
| 9 | YELLOW BALL TOPAZ | $Al_2(F,OH)_2(SiO_4)$ | 1340 |
| 10 | GARNET | $(Mg,Ca,Fe)_3(Al,Cr,Fe)_2(SiO_4)_3$ | 1360 |
| 11 | FUSED ZIRCONIA TANTALUM CARBIDE | $ZrO_2$ <br> TaC | (1160) <br> 2000 |
| 12 | STEEL BALL CORUNDUM TUNGSTEN CARBIDE | $Al_2O_3$ <br> WC | (2100) <br> 1880 |
| 13 | SILICON CARBIDE | SiC | 2480 |
| 14 | BORON CARBIDE | $B_4C$ | 2750 |
| 15 | DIAMOND (JEWELS) | C | 7000 |

An example of the inorganic substance having a Mohs hardness of 9 or more is, $Al_2(F,OH)_2(SiO_4)$, $(Mg,Ca,Fe)_3(Al,Cr,Fe)_2(SiO_4)_3$, $ZrO_2$, TaC, $Al_2O_3$, WC, SiC, $B_4C$, C, SiOC, SiCN and the like. Among these, $Al_2O_3$, SiC, SiOC, or SiCN is preferable.

When the Mohs hardness of the inorganic substance contained in the unevenness layer is defined as X and the number of stages of the stairs in the protruding portion is defined as an integer Y, the following formula (II) is preferably satisfied, and the following formula (III) is more preferably satisfied.

$$\text{Formula (II): } 10 \leq X \times Y$$

$$\text{Formula (III): } 14 \leq X \times Y \leq 39$$

That is, when the number of stages is one, it is preferable to contain an inorganic substance having a Mohs hardness of 10 or more. When the number of stages is two, an inorganic substance having a Mohs hardness of 5 or more is preferably contained. The inorganic substance satisfying Formula (II) or Formula (III) is preferably contained as a main component in the unevenness layer while

It may be contained or may be contained as an accessory component.

3 high-hardness layer

The function film of the present embodiment preferably includes a high-hardness layer. Specifically, it is preferable to form the unevenness layer with a material whose hardness is relatively not excessively high and with which the fine unevenness structure is easily formed, and form the high-hardness layer with a material whose hardness is higher than that of the material of the unevenness layer. Thus, both rubbing resistance and water repellency can be sufficiently achieved in the function film.

A material of the high-hardness layer is not particularly limited as long as the material has a higher hardness than a material of the unevenness layer. The thicknesses of the high-hardness layers are not particularly limited, but are preferably in a range of 0.1 to 20 nm.

4 slip-down layer

The function film of the present embodiment preferably includes a slip-down layer. Thus, fogging of the function film can be prevented. It is possible to increase adhesion between the water-repellent layer and the unevenness layer or between the water-repellent layer and the high-hardness layer, and it is possible to sufficiently achieve both rubbing resistance and water repellency in the function film.

In the present embodiment, the "slip-down layer" refers to a layer having a contact angle within a range of 40 to 120 degrees after a single film having a 100 nm thickness is formed on a white glass substrate (manufactured by SCHOTT) and is allowed to stand for 3 days at room temperature. Further, the difference between this contact angle and the contact angle of the unevenness layer alone is preferably 20 degrees or more. Note that the material of the slip-down layer is not particularly limited as long as the above conditions are satisfied.

Examples of the material of the slip-down layer include $Ta_2O_5$ - $TiO_2$, $Ta_2O_5$, $TiO_2$, SiC and $Al_2O_3$, $HfO_2$. Examples of commercially available products of $Ta_2O_5$ -$TiO_2$ include "OA-600" (manufactured by Canon Optron Inc).

The thicknesses of the slip-down layers are not particularly limited, but are preferably in a range of 0.1 to 20 nm.

5 water-repellent layer

In the present embodiment, the term "water-repellent" refers to a contact angle of water at 23°C of 90 degrees or more.

The water-repellent layer according to the present embodiment contains two or more kinds of water-repellent materials, that is, at least a first water-repellent material and a second water-repellent material. Although the structure of the water-repellent layer is not particularly limited, two or more kinds of water-repellent materials are exposed on the surface of the water-repellent layer. That is, water deposited on the surface of the function film is affected by two or more kinds of water-repellent materials. Therefore, since the water-repellent layer contains the first water-repellent material having extremely high water repellency and the second water-repellent material having lower water repellency than the first water-repellent material but having higher hardness than the first water-repellent material, the water-repellent layer can have both abrasion resistance and water repellency.

The water-repellent layer does not need to be formed on the entire function film front surface, but preferably covers at least the uppermost surface 31a of the unevenness layer 31. Thus, sufficient water repellency can be obtained.

The water-repellent material is not particularly limited as long as the material can impart function to the function film. Examples of the water-repellent material include fluorine (F)-based, silicon (Si) -based, and hydrocarbon-based materials. Examples of commercially available products of the water-repellent material include "FLUOROSURF (R)" (manufactured by Fluoro Technology Inc), "OPTOOL (R)" (manufactured by Daikin Industries, Ltd), and "SURFCLEAR (R) 100" (manufactured by Canon Optron Inc).

In particular, the water-repellent layer preferably contains a fluorine-based material as the first water-repellent material and a silicon-based material as the second water-repellent material. Thus, both abrasion resistance and water repellency can be sufficiently achieved. In addition, the water repellency of a fluorine-based material is highly dependent on molecular orientation, whereas the water repellency of a silicon-based material is less dependent on molecular orientation. When the surface of the water-repellent layer is rubbed, the degree of orientation of molecules is likely to decrease. Therefore, by containing the silicon-based material having a low dependency on the molecular orientation in addition to the fluorine-based material, it is possible to prevent the water repellency from being excessively lowered even when the surface of the water-repellent layer is rubbed.

The elemental ratio of fluorine (F) to silicon (Si) in the surface of the water-repellent layer is not particularly limited, but is preferably in the range of 99:1 to 50:50, more preferably in the range of 99:1 to 70:30. Thus, both abrasion resistance and water repellency can be sufficiently achieved. The elemental ratio of fluorine (F) to silicon (Si) can be measured by X-ray photoelectron spectroscopy (XPS).

It is preferable that separation of the silicon-based material and the fluorine-based material does not occur and the silicon-based material is dispersed uniformly to some extent on the surface of the water-repellent layer. Thus, both abrasion resistance and water repellency can be sufficiently achieved. For example, both the fluorine-based material and the silicon-based material are preferably exposed even in a narrow area of the water-repellent layer covering a single protruding portion.

6 Physical Property of function film

(1) Contact angle

From the viewpoint that the function film of the present embodiment has water repellency, the contact angle is 90 degrees or more. From the viewpoint of exhibiting higher water repellency, the contact angle is preferably 110 degrees or more, more preferably 130 degrees or more, and still more preferably 150 degrees or more. When the contact angle is 150 degrees or more, it is also referred to as super-water repellency.

The contact angle can be measured by the following method. Using a contact angle measuring device, $10\mu L$ of pure water is added dropwise to the function film under an environment of 23°C and 50% RH, and the static contact angle is measured 5 seconds after the dropwise addition. As a contact angle measuring device, for example, a goniometer "G-1" (manufactured by Erma Inc) can be used.

(2) Slip -down angle

A droplet is gradually inclined from a horizontal state, and an inclination angle at which the droplet starts to slip down is referred to as a "slip-down angle". It can be said that, for a same droplet amount, the smaller the slide-down angle, the weaker the adhesion between the surface and the liquid. That is, in the present embodiment, it can be said that the smaller the slip-down angle, the higher the water repellency. The slide-down angle is preferably 60 degrees or less, and more preferably 30 degrees or less. The slip-down angle can also be measured by the same sequence as the contact angle.

(3) reflectance

When the function film of the present embodiment is used for an optical component, the reflectance of the function film is preferably low in a wavelength region corresponding to the use of the optical component. For example, when the function film is used for an in-vehicle camera lens described below, the average reflectance of the function film in the range of wavelengths of 450 to 780 nm is preferably 5% or less, more preferably 3% or less, and still more preferably 1% or less. In addition, from such a viewpoint, the refractive index of the function film is preferably in a range of 1.2 to 1.8. In addition, the refractive index of the unevenness layer alone is preferably within a range of 1.4 to 1.7.

7 producing method of function film

The producing method of a function film of the present embodiment includes a step of forming an unevenness layer and a step of forming a water-repellent layer. The step of forming the water-repellent layer includes the steps of applying the first water-repellent material onto the unevenness layer, and applying the second water-repellent material onto the unevenness layer before the layer of the first water-repellent material is formed.

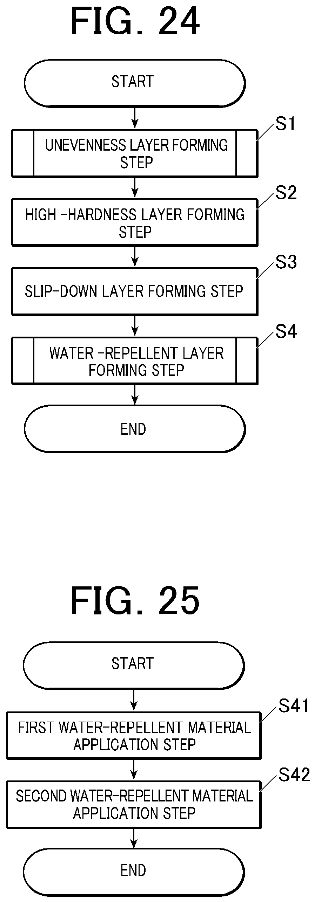

Fig. 24 is a flowchart of a producing method of a function film in the present embodiment. In the present embodiment, an unevenness layer, a high-hardness layer, a slip-down layer, and a water-repellent layer are formed in this order. Note that the high-hardness layer and the slip-down layer are formed as necessary.

The function film is preferably produced on a base material. The function film is preferably used without being peeled off from the substrate after being produced on the substrate. For example, when the function film is used as a water-repellent film to be applied to a lens, it is preferable to apply the function film directly onto the lens as a substrate.

The material of the base material is not particularly limited, and may be an inorganic material, an organic material, or a combination thereof. The substrate may be formed by forming a film of an organic material on an inorganic material such as glass.

Examples of the inorganic material include glass, fused quartz glass, synthetic quartz glass, silicon, and chalcogenide.

Examples of the organic material include polyethylene terephthalate (PET), acrylic resin, vinyl chloride resin, cycloolefin polymer (COP), cycloolefin copolymer (COC), polymethyl methacrylate (PMMA), polycarbonate (PC), polypropylene (PP), and polyethylene (PE).

Examples of the radical polymerization-type ultraviolet curable resin include acrylate resin, urethane acrylate, polyester acrylate, polybutadiene acrylate, epoxy acrylate, silicon acrylate, amino resin acrylate, and enethiol resin. Examples of the cationic polymerization type ultraviolet curable resin include a vinyl ether resin, an alicyclic epoxy resin, a glycidyl ether epoxy resin, a urethane vinyl ether resin, and a polyester vinyl ether resin.

Examples of the thermal curing resin include an epoxy resin, a phenol resin, an unsaturated polyester resin, a urea resin, a melamine resin, a silicone resin, and polyurethane.

When the function film is used in an optical device as described later, the substrate is preferably glass from the viewpoint of transparency. When the function film is used in an inkjet head, the base material is preferably silicon. When the function film is used for a mold, the substrate is preferably SiC, cemented carbide, or the like.

(1) unevenness layer forming step S1

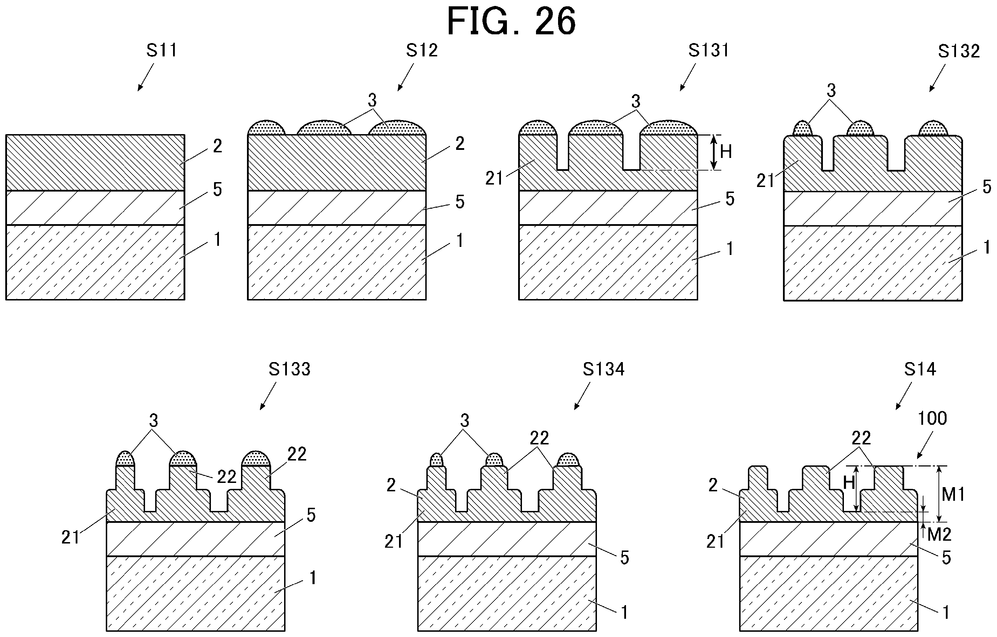

Fig. 25 is a flowchart of an unevenness layer forming step. Fig. 26 is a step diagram illustrating an example of an unevenness layer forming step. In the unevenness layer forming step S1, first, a uniformly-thick inorganic substance layer is formed. Next, after a mask is formed on the surface of the inorganic substance layer and etching is performed, the mask is peeled off, and thus the inorganic substance layer in which the fine unevenness structure is formed, that is, the unevenness layer is obtained. Details of each step are described below.

(11) inorganic substance layer Forming Step S11

As shown in FIG. 26, the reflectance adjustment layer 5 is formed on the base material 1, and the inorganic substance layer 2 containing an inorganic substance as a main component is formed on the reflectance adjustment layer 5 by, for example, a dry film forming method. When the reflectance adjustment layer 5 is not provided, although not illustrated, the inorganic substance layer 2 is formed on the base material 1. Note that details of the reflectance adjustment layer 5 will be described later.

Examples of the dry film forming method include a vacuum vapor deposition method, an ion beam vapor deposition method, and an ion plating method. Furthermore, among the dry film formation methods, examples of the sputter-based method include a sputtering method, an ion beam sputtering method, and a magnetron sputtering method. Among these, an ion assisted deposition method (IAD method) or a sputtering method is preferable.

The thickness of the inorganic substance layer is preferably adjusted as appropriate depending on the type of the inorganic substance. When the inorganic substance is $SiO_2$, the thicknesses are preferably in the range of 100 to 600 nm. When the inorganic substance is SiC, the thicknesses are preferably within a range of 100 to 1000 nm. When the inorganic substance is SiOC, the film thickness is preferably within a range of 100 to 500 nm. When the inorganic substance is SiCN, the thicknesses are preferably within a range of 100 to 500 nm.

(12) Mask Forming Step S12

Next, as shown in FIG. 26, a mask 3 is formed on the inorganic substance layer 2. In the present embodiment, the mask forming step is performed once.

The mask is preferably formed of a metal portion covering a portion not to be etched and an exposed portion exposing a portion to be etched. Examples of the main component metal of the mask include silver (Ag), indium, and tin, and among these, silver is preferable. The thicknesses of the masks are preferably within a range of 2 to 100 nm.

Although depending on the film formation conditions, for example, when a mask is formed using a vapor deposition method under the conditions of a base material temperature of 370°C, a rate of 3 Å, and a thickness of 2 nm, a mask in which a large number of particles are dispersed is formed. In this case, the metal portion is in the form of particles. In addition, for example, when a mask is formed under conditions of a base material temperature of 170°C, a rate of 3 Å, and a thickness of 12 to 15 nm using a vapor deposition method, a net-like mask in which elongated particles or strings are intertwined is formed. In this case, the metal portion has a mesh shape.

Furthermore, for example, when a mask is formed using a sputtering method under the conditions of a base material temperature of 30°C, a rate of 3 Å, and a thick 10 nm portion, a porous mask is formed. In this case, the exposed portion is a porous fine hole. As described above, the shape of the mask can be controlled by adjusting the method of forming the mask, the substrate temperature, the film formation rate, the film formation thickness, and the like. As a result, the shape of the protruding portion can be controlled.

The film formation temperature of the mask is preferably within a range of 20 to 400°C. The shape of the mask can be controlled by adjusting the film formation temperature of the mask, so that the shape of the protruding portion can be controlled.

(13) Etching step S13

Next, the inorganic substance layer 2 is etched. The etching step is performed at least once, and may be performed twice or more.

In the present embodiment, the term "the number of etching steps" refers to the number of steps counted as one time from the time when an etching target is placed in an etching apparatus and etching is started until the time when the etching apparatus is opened to the atmosphere. That is, even in a case where etching conditions are changed during etching, an etching step is counted as one time in a case where exposure to the atmosphere is not performed.

In the etching step, anisotropic etching conditions and isotropic etching conditions are preferably combined. Specifically, first, etching is performed under anisotropic etching conditions, and then etching is performed under isotropic etching conditions. It is preferable to repeat this combination of anisotropic etching and isotropic etching a plurality of times.

For example, it is preferable that isotropic etching be performed after anisotropic etching, and then this combination be repeated. Furthermore, it is more preferable that the series of etching steps be performed without exposure to the air. In this case, since exposure to the atmosphere is not performed, the etching step is performed one time.

Alternatively, after the anisotropic etching is performed, the mask may be opened to the air and stored under the humidity of the air for one hour to promote the movement of the mask, and then the anisotropic etching may be performed again. In this case, the etching step is performed twice.

In particular, when the protruding portion has two or more stages, anisotropic etching and isotropic etching are performed in combination. When the number of stages of the protruding portion is one, the protruding portion can be formed only by performing anisotropic etching.

In the present embodiment, "isotropic etching" refers to etching that progresses at a uniform rate in all directions of a target. "Anisotropic etching" refers to etching in which the speed is high in a specific direction of a target. That is, in the anisotropic etching, etching preferentially proceeds only in a specific direction of the target.

Therefore, when anisotropic etching is performed through the mask, etching preferentially proceeds in the depth direction (film thickness direction) of the inorganic substance layer, and thus unevenness is formed in the inorganic substance layer.

By performing the isotropic etching, the etching progresses in the depth direction (film thickness direction) of the mask and in the plane direction of the mask in the same manner, and the size of the mask can be changed. That is, when the size of the mask is changed, it is not necessary to peel off the mask once and form a new mask. Therefore, it is not necessary to form a mask for each stage of the stairs in the protruding portion, and the number of times of forming the mask can be reduced. As a result, a component of the mask does not enter grooves formed by etching, and thus a fine unevenness structure having a desired shape can be formed. In addition, since the number of times of peeling of the mask can be reduced, it is possible to reduce peeling and removal of a part of the inorganic substance layer together with the mask at the time of peeling.

By performing isotropic etching, a sharp corner can be removed at the pin angle of the inorganic substance layer, and a rounded shape can be formed. In addition, since the side surface in the vicinity of the pin corner is also etched and a position closer to the upper surface is cut, a tapered shape which is tapered toward the upper portion can be formed.

(13.1) Anisotropic Etching

The inorganic substance layer is etched from the upper surface side (front surface side) through the mask by anisotropic etching. The recess portions of the unevenness layer are formed by the anisotropic etching, and as a result, the protruding portions are formed.

In the case where the protruding portion has two stages, the anisotropic etching preferably includes first anisotropic etching and second anisotropic etching. After the first anisotropic etching is performed as illustrated in the S131 of Fig. 26, It is preferable to perform the first isotropic etching as illustrated in the S132 of Fig. 26 and then perform the second anisotropic etching as illustrated in the S133 of Fig. 26. From the viewpoint of cost reduction, it is preferable not to expose to the atmosphere between a series of etching step.

In the first anisotropic etching, etching is preferably performed to the extent that the surface of the reflectance adjustment layer is not exposed. For example, it is preferable to control the etching time such that the total average height H is 1 $\mu$m or less. A protruding portion and recess portions are formed by the first anisotropic etching. Note that as described later, in a case where the reflectance adjustment layer includes a photocatalyst layer, since the photocatalyst layer is preferably exposed, etching is performed so that the photocatalyst layer is exposed.

The second anisotropic etching is performed after the first isotropic etching to be described later. Since the mask is reduced in size by the first isotropic etching, the inorganic substance layer is etched from the upper surface side (front surface side) through the reduced mask in the second anisotropic etching. In the second anisotropic etching, etching is preferably performed to such an extent that the surface of the reflectance adjustment layer is not exposed in the recess portion. To be specific, it is preferable to control the etching time such that the height of the lowermost stage is within a range of 10 to 200 nm. Two stages are formed in the protruding portion by the second anisotropic etching.

The frequency of the RF power source during anisotropic etching is preferably as low as possible, although it is not necessarily in this range due to the capability of the apparatus. Thus, the cost of a mass production apparatus is reduced, which is advantageous in increasing the size. In the first anisotropic etching, the frequencies of the RF power sources are preferably within a range of 0. 5 KHz to 1 MHz, and in the second anisotropic etching, the frequencies of the RF power sources are preferably within a range of 0. 5 KHz to 1 MHz.

From the viewpoint of increasing the selectivity of the mask, the power density is preferably within a range of 0.01 to 1 W/cm$^2$ in the first anisotropic etching, and is preferably within a range of 0.01 to 1 W/cm$^2$ in the second anisotropic etching. The term "selectivity of the mask" as used herein means a value represented by (rate at which the inorganic substance layer is removed)/(rate at which the mask is removed). That is, "the selectivity of the mask is increased" means that the inorganic substance layer is more preferentially scraped than the mask.

From the viewpoint of increasing the selection ratio of the mask, the base material preferably has a cooling mechanism or a heat dissipation mechanism. In the case where there is no cooling mechanism or heat dissipation mechanism, power may be stopped as appropriate for cooling to provide a standby time, or the etching step may be completely stopped and the chamber may be once opened to the atmosphere to dissipate heat. Alternatively, a pulse power source may be used to intermittently apply power while turning on and off the power.

The time of the first anisotropic etching is preferably within a range of 1 minute to 2 hours, and the time of the second anisotropic etching is preferably within a range of 1 minute to 2 hours. The inside of the chamber of the etching apparatus is preferably at a temperature within a range of 5 to 30°C and at a starting vacuum degree within a range of 1 to 20 Pa.

For the first and second anisotropic etching, an etching apparatus for performing reactive dry etching or an apparatus obtained by introducing an etching gas into an IAD vapor deposition apparatus is preferably used. It is preferable that the etching apparatus include a plasma electrode and have a configuration in which the plasma electrode can be cooled.

As an etching gas, $CHF_3$, $CF_4$, $COF_2$, $SF_6$, or the like is preferably used. As a result, etching is performed from the upper surface of the inorganic substance layer to the vicinity of the upper surface of the reflectance adjustment layer in a predetermined size, and a plurality of recess portions are formed, whereby protruding portion are formed. That is, a portion of the inorganic substance layer corresponding to the exposed portion of the mask is etched.

The flow rate of the etching gas in the first anisotropic etching is preferably within a range of 5 to 100 sccm. The flow rate of the etching gas in the second anisotropic etching is preferably within a range of 5 to 100 sccm.

(13.2) isotropic etching

The mask is etched by isotropic etching. By the isotropic etching, the depth direction (thickness direction) and the plane direction of the mask are etched, and the size of the mask is changed.

In addition, in the isotropic etching, it is preferable that not only the size of the mask is changed, but also a shape in which a corner is rounded is formed at the pin angle of the inorganic substance layer. That is, it is preferable to have a step of removing corners and rounding the corners in the plurality of protruding portions included in the fine unevenness structure. As described next, by controlling the power density and the time, the size of the mask can be changed, and a shape having rounded corners can be formed at the pin corners of the inorganic substance layer.

When the protruding portion has two stages, the isotropic etching preferably includes first isotropic etching as shown in S132 of FIG. 26 and second isotropic etching as shown in S134 of FIG. 26. The second isotropic etching is preferably performed before the mask is peeled off. Thus, the tip end portion can be rounded, and the upper surface of the first stage can be prevented from being excessively ground.

In the isotropic etching, the degree of vacuum or the power density is preferably changed at least once during the etching. For example, initially, the isotropic etching is performed with the vacuum degree in a range of 5 to 20 Pa and the power density in a range of 0.01 to 0.5 $W/cm^2$. It is preferable to change the vacuum degree to within a range of 1 to 10 Pa and the power density to within a range of 0.03 to 1.0 $W/cm^2$ from the middle.

The time of the initial isotropic etching is preferably within a range of 1 minute to 2 hours, and the time of the isotropic etching after the condition change is preferably within a range of 1 minute to 1 hour. The inside of the chamber of the etching apparatus is preferably at a temperature within a range of 5 to 30°C and at a starting vacuum degree within a range of 1 to 20 Pa.

For the isotropic etching, an etching apparatus for performing reactive dry etching or an IAD vapor deposition apparatus into which an etching gas is introduced is preferably used. As the etching gas, for example, Ar, $O_2$, $N_2$, $CHF_3$, $CF_4$, $COF_2$, $SF_6$, or the like is used. Thus, the mask is isotropically etched, and the size of the mask is changed. The flow rate of the etching gas in the isotropic etching is preferably within a range of 5 to 100 sccm.

The mask modified by the first isotropic etching preferably has an average width in a range of 10 to 200 nm when viewed in top plan and an average height in a range of 5 to 50 nm in a vertical cross-sectional shape in a thickness direction. Note that as the etching time is longer, the shape of the mask becomes closer to a circle, that is, the ratio of the major axis diameter to the minor axis diameter becomes closer to 1.

(14) Mask Peeling step S14

As shown in FIG. 26, the mask formed on the upper surface of the inorganic substance layer is peeled off and removed. Specifically, the mask is removed by wet etching using a chemical such as nitric acid, acetic acid, iodine, or potassium iodide. Further, the mask may be removed by dry etching using Ar (argon) or $O_2$(nitrogen) as etching gas. The unevenness layer in which the protruding portion has a stepwise shape is formed by removing the mask.

(15) Conditions of Mask

In a case of forming a unevenness layer in which the number of stages in a protruding portion is three, the width of a mask used in forming the third stage is preferably in a range of 5 to 100 nm. The mask for forming the second stage is preferably in the range of 5 to 70 nm thick. The mask for forming the first stage is preferably within a range of 2 to 10 nm thick.

(2) High -hardness layer forming step S2

In the high-hardness layer forming step S2, a high-hardness layer is formed on the upper surface of the formed unevenness layer. A method for forming the high-hardness layer is not particularly limited. Examples of the formation method include a vacuum deposition method, an ion-assisted deposition method (IAD method), a sputtering method, and a CVD method. The temperature at which the high-hardness layer is formed is not particularly limited.

The high-hardness layer may be formed so as to cover the entire unevenness layer, or may be formed so as to cover only a part of the unevenness layer. In the case of covering only part of the unevenness layer, it is preferable to cover at least the upper surface of the uppermost stage of the unevenness layer.

(3) slip-down layer forming step S3

In the slip-down layer forming step S3, a slip-down layer is formed on the upper surface of the formed high-hardness layer. A method for forming the slip-down layer is not particularly limited. Examples of the formation method include a vacuum deposition method, an ion-assisted deposition method (IAD method), a sputtering method, and a CVD method.

The slip-down layer may be formed so as to cover the entire unevenness layer, or may be formed so as to cover only a part of the unevenness layer. In the case of covering only part of the unevenness layer, it is preferable to cover at least the upper surface of the uppermost stage of the unevenness layer.

(4) Water -repellent layer forming step S4

In the water-repellent layer forming step S4, a water-repellent layer is formed on the upper surface of the formed slip-down layer. A method for forming the water-repellent layer is not particularly limited. However, from the viewpoint that it is preferable that two or more kinds of water-repellent materials are exposed on the surface and the two or more kinds of water-repellent materials are uniformly mixed without separation, it is preferable to form by the following method.

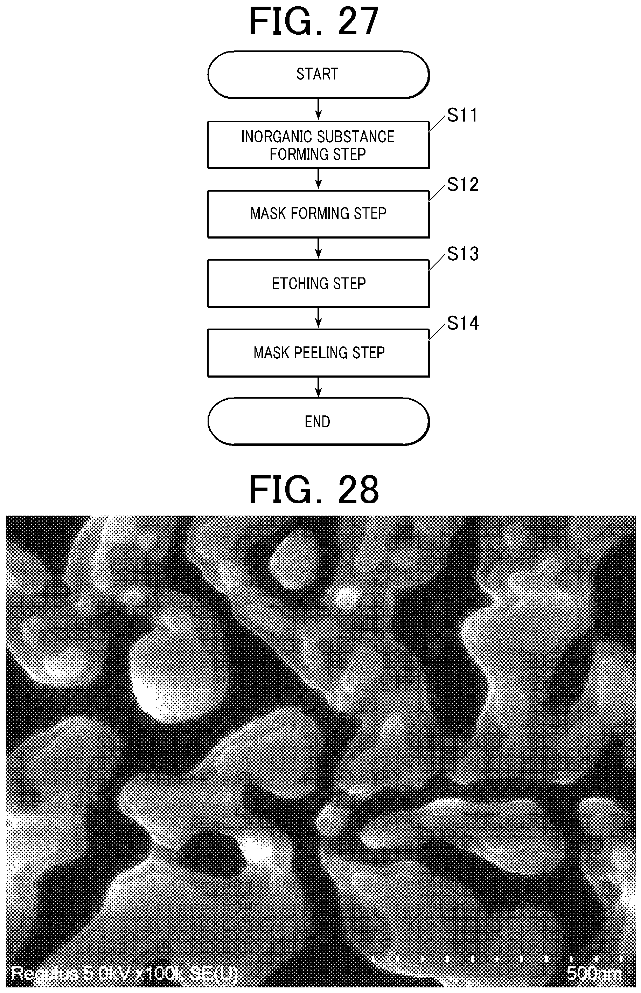

Fig. 27 is a flowchart of a water-repellent layer forming step. In the water-repellent layer forming step S4, the second water-repellent material application step S41 is performed after the first water-repellent material application step S42. In practice, two types of water-repellent materials are prepared and placed on different resistance-heating boats. Next, it is preferable that the first water repellent composition and the second water repellent composition are sequentially applied to the upper surface of the slip-down layer by a resistance heating vapor deposition method. Furthermore, it is desirable that the application of the first water-repellent composition and the application of the second water-repellent composition are continuously performed under the same vacuum condition and are not opened to the atmosphere. Originally, the second water-repellent composition cannot be adhered after the first water-repellent composition is dried, but thus, the second water-repellent composition can be mixed on the first water-repellent composition to be adhered to each other.

That is, the application of the second water repellent composition is performed before the solvent contained in the first water repellent composition is evaporated and dried to form a layer. As a result, one layer is formed in a state where two or more kinds of water-repellent materials are mixed to some extent.

It is considered that the water repellency of the water-repellent material decreases when the molecular orientation collapses, and it is considered that the better the water repellency of the water-repellent material, the more the performance depends on the molecular orientation. To solve the problem that when a function film using a water-repellent material having high dependency on molecular orientation is rubbed with lens paper containing water, the degree of orientation of the water-repellent material is lowered and water-repellent performance is deteriorated at once. On the other hand, it is considered that even when a function film using a water-repellent material having low dependence on molecular orientation is rubbed with lens paper containing water and the degree of orientation of the water-repellent material is lowered, the water-repellent performance is not so much degraded and the function film is relatively durable. Therefore, it is considered that by arranging a water-repellent material having high dependence on molecular orientation and excellent water-repellent performance as a lower layer and arranging a water-repellent material having low dependence on molecular orientation thereon, the abrasion resistance can be improved while maintaining the water-repellent performance. The reason why the water-repellent performance can be maintained is that electrical properties affect surface properties over a short distance, that is, a water-repellent material highly dependent on molecular orientation greatly affects the water-repellent performance at the outermost surface of the function film even in a lower layer. Thus, it is considered that both rubbing resistance and water repellency can be achieved in the function film.

In the present embodiment, the water-repellent layer preferably contains a fluorine-based material and a silicon-based material. In this case, generally, a fluorine-based material is more dependent on molecular orientation than a silicon-based material, and therefore, it is preferable that the fluorine-based material and the silicon-based material be applied to the upper surface of the slip-down layer in this order. Further, the silicon-based material is applied before the layer of the fluorine-based material is formed, that is, before the solvent applied together with the fluorine-based material is evaporated and dried. Thus, it is considered that the fluorine-based material and the silicon-based material are mixed to some extent, and both the silicon-based material and the fluorine-based material are exposed on the surface of the water-repellent layer.

Examples of the method for applying the water-repellent composition include a spin coating method, a dip coating method, and a vacuum deposition method. Examples of an apparatus for forming the water-repellent layer include a dry film forming apparatus and a wet film forming apparatus.

Note that the formation method in the case of forming the water-repellent layer on the upper surface of the slip-down layer has been described above, but the water-repellent layer can be formed by the same method also in the case of forming the water-repellent layer on the upper surface of the unevenness layer or the high-hardness layer.

8 Use of function film

By using the function film of the present embodiment, water repellency can be imparted. Furthermore, the function film of the present embodiment has high transparency and low reflection depending on the material, and therefore, is suitably included in an optical component.

The function film is used for coating of water-repellent, antibacterial, antifungal, and the like. Specific examples include coating of components and housings of electronic devices and the like, tableware, toilets, bathtubs, sinks, window glass and the like. In addition, since the function film has a small thickness, the function film is used for a precise structure, and is suitably provided in an inkjet head, a mold, or the like.

(1) inkjet head

When the function film is provided on a base material and the base material is used as an inkjet head, the base material is preferably silicon from the viewpoint of durability and processing characteristics. The inorganic substance as the main component contained in the unevenness layer is preferably SiC from the viewpoint of the ink wiping property.

(2) Mold

When the function film is applied to a substrate and the substrate is used as a mold, the substrate is preferably SiC or a cemented carbide from the viewpoint of strength. The inorganic substance as the main component contained in the unevenness layer is preferably SiC from the viewpoint of strength. In addition, SiC is easily etched because a reaction product by fluorine gas is easily obtained.

(3) Optical component

It is preferable that the optical device includes an optical component to which the function film is applied. Examples of the optical component include a lens and a mirror. The function film may be directly applied to a lens, a mirror, or the like, or may be applied to a cover glass, an antibacterial cover member, an antifungal coating member, or the like of the lens, the mirror, or the like.

Specifically, the function film is preferably applied to a lens for an in-vehicle camera, a lens for a communication camera, an antibacterial lens for an endoscope camera, or the like. Above all, it is preferably applied to a lens for an on-vehicle camera, and the on-vehicle camera is preferably attached to the outside of a vehicle. A camera attached to the outside of a vehicle is likely to contact waterdrops, sand, dust, and the like, but providing the function film of the present embodiment can prevent these from adhering to and remaining on a lens to contaminate it.

When the function film is provided on a base material and the base material is used as an optical component, the base material is preferably glass from the viewpoint of transparency. The inorganic substance as a main component to be contained in the unevenness layer preferably satisfies $SiO_2$ from the viewpoint of transparency. In addition, $SiO_2$ is easily etched because a reaction product by a fluorine gas is easily obtained.

When the function film is applied to a substrate and the substrate is used as an optical component, the optical component may include a reflectance adjustment layer between the substrate and the unevenness layer. Note that the reflectance adjustment layer may have a single-layer structure or a multilayer structure. The material of the reflectance adjustment layer is not particularly limited, and examples thereof include $Al_2O_3$, ZnS and SIC.

The optical component preferably has low reflection. The refractive index is preferably increased in the order of the function film, the reflectance adjustment layer, and the base material. Specifically, when the refractive index of the reflectance adjustment layer is within a range of 1.3 to 3.5 and the refractive index of the base material is within a range of 1.45 to 5.0, the reflectance of the optical component can be sufficiently reduced. The average light reflectance of the optical component in the range of wavelength of 450 to 780 nm is preferably 5% or less, more preferably 3% or less, and still more preferably 1% or less.

[example]

Hereinafter, the present invention will be specifically described with reference to example(s), but the present invention is not limited thereto. In the example, "part(s)" or "%" means "parts by mass" or "% by mass" unless otherwise specified.

In the following examples, operations were performed at room temperature (25°C) unless otherwise specified.

1 Production of function film 1

A reflectance adjustment layer was formed on a substrate, and a function film was produced on the reflectance adjustment layer. The number of stages in the protruding portions of the unevenness layer was two. Note that the formed laminate, that is, the entirety of the base material, the reflectance adjustment layer, and the function film is hereinafter referred to as an optical component.

(1) Preparation of Substrate

As a base material, a glass substrate "TafD lens" (manufactured by HOYA Corporation) (refractive index: 1.84) was prepared.

Note that each base material shown in the following table is as follows.

- TafD lens( glass substrate, manufactured by HOYA Corporation)
- Si (silicon substrate, manufactured by Furuuchi Chemical Corporation)
- SiC (silicon carbide substrate, manufactured by Ashac Corporation)

(2) Formation of Reflectance Adjustment Layer

The reflectance adjustment layer had a two layer structure of a $SiO_2$ layer (thick 10 nm) and an $Al_2O_3$ layer (thick 32 nm) from the substrate side.

The substrate was placed in an IAD vacuum vapor deposition apparatus. $SiO_2$ was charged as a film-forming material and vapor-deposited at a film-forming rate of 1 Å/sec to form an $SiO_2$ layer having a 10 nm thickness on the substrate.

The IAD conditions were an accelerating voltage 1000 V, an accelerating current 1000 mA, a suppresser voltage 500 V, a neutralization current 1500 mA, and a neutral gas Ar10sccm.

heating temperature 160°C
Start vacuum degree $3.0 \times 10^{-3} P_a$
(Evaporation Source of Film-forming Material)
electron gun (IAD ion source)
Shincron RF ion source NIS-175-3
Film -forming material: $SiO_2$ (manufactured by Canon Optron Inc., trade name: $SiO_2$).

The substrate on which the SiO 2 layer had been formed was placed in an IAD vacuum vapor deposition apparatus. $Al_2O_3$ was charged as a film-forming material and vapor-deposited at a film-forming rate of 3 Å/sec to form an $Al_2O_3$ layer having a thickness of 32 nm on the $SiO_2$ layer.

The IAD conditions were an accelerating voltage 1000 V, an accelerating current 1000 mA, a suppresser voltage 500 V, a neutralization current 1500 mA, and a neutral gas Ar10sccm.

(In-chamber Conditions)
heating temperature 160°C
Start vacuum degree $3.0 \times 10^{-3} P_a$
(Evaporation Source of Film-forming Material)
Electron gun
(IAD Ion Source)
Shincron RF ion source NIS-175-3
Film -forming material: $Al_2O_3$ (manufactured by Canon Optron Inc., trade name: $Al_2O_3$).

(3) Formation of unevenness layer 1

(31) Formation of inorganic substance layer 1

The base material having the reflectance adjustment layer formed thereon was placed in an IAD vacuum vapor deposition apparatus. $SiO_2$ was loaded as a film-forming material and vapor-deposited at a film-forming rate of 1 Å/sec to form a 475 nm inorganic substance layer ($SiO_2$ layer) on the reflectance adjustment layer.

The IAD conditions were an accelerating voltage 1000 V, an accelerating current 1000 mA, a suppresser voltage 500 V, a neutralization current 1500 mA, and a neutral gas Ar10sccm.

(In-chamber Conditions)
Heating temperature: 370°C
Starting vacuum degree: $3.0 \times 10^{-3} P_a$
(Evaporation Source of Film-forming Material)
Electron gun
(IAD Ion Source)
Shincron RF ion source NIS-175-3
Film -forming material of inorganic substance layer: $_{SiO2}$(manufactured by Canon Optron Inc., trade name: $SiO_2$).

(32) Formation of Ag Mask

An Ag mask was formed on the formed inorganic substance layer. Using a film forming apparatus (BMC-800T, manufactured by Synchron), a film was formed under the following conditions to form an Ag mask. The thickness of the Ag mask was 20 nm.

Heating temperature: 160°C
Starting degree of vacuum: $1.33 \times 10^{-3} P_a$
Film formation rate: 1 Å/sec

(33) Etching

(33.1) First anisotropic etching

In the etching device, the substrate on which the Ag mask was formed was placed on a plasma electrode through which internal cooling water at 20°C flowed, and first anisotropic etching was performed. Etching was performed at an etching rate of 2 nm/minute, to form a second stage (lowermost stage) uneven shape. The etching depth, that is, the total average height H of the protruding portion was defined as the 100 nm.

The etching conditions were an input power of 300 W, a gas flow rate of 50 sccm, and a vacuum degree of 10pa.

(In-chamber Conditions)

Device: BIG CUBE manufactured by YOU-PATENTER Co., Ltd.
Temperature: 20°C
Initial degree of vacuum: 10.0 Pa
(Etching Gas)
$CHF_3$
(Etching Gas Flow Rate)
50sccm
(Power Density)
$0.035W/cm^2$

(33.2) First isotropic etching

After forming the uneven shape of the second stage (lowermost stage), subsequently, isotropic etching was performed for changing the size of the Ag mask. Furthermore, in the isotropic etching, the corners of the end of the second stage were rounded.

The etching was performed under the conditions of an input power of 800 W, a gas flow rate of 50 sccm, and a vacuum degree of 10pa for a 700 s.

(In-chamber Conditions)

device: BIG CUBE manufactured by YOU-PATENTER Co., Ltd
Temperature: 20°C
Initial degree of vacuum: 10.0 Pa
(Etching Gas)
$CHF_3$
(Etching Gas Flow Rate)
20 sccm
(Power Density)
$0.095W/cm^2$

(33.3) Second anisotropic etching

After changing a size of a mask by isotropic etching, Subsequently, second anisotropic etching was performed. Etching was performed at an etching rate of 2 nm/minute, to form a first stage uneven shape. The etching depth, that is, the average height h of the first stage (uppermost stage) was set to 50 nm.
The etching conditions were an input power of 300 W, a gas flow rate of 50 sccm, and a vacuum degree of 10pa.

(In-chamber Conditions)

device: BIG CUBE manufactured by YOU-PATENTER Co., Ltd
Temperature: 20°C
Initial degree of vacuum: 10.0 Pa
(Etching Gas)
$CHF_3$
(Etching Gas Flow Rate)
50sccm
(Power Density)
$0.035W/cm^2$

(33.4) Second isotropic etching

After forming the first stage uneven shape, Subsequently, isotropic etching was performed in order to round off the corners at the end of the first stage to form a rounded shape.
The etching was performed under the conditions of an input power of 800 W, a gas flow rate of 50 sccm, and a vacuum degree of 10pa for 300 s minutes.

(In-chamber Conditions)

device: BIG CUBE manufactured by YOU-PATENTER Co., Ltd
Temperature: 20°C
Initial degree of vacuum: 10.0 Pa
(Etching Gas)
$CHF_3$
(Etching Gas Flow Rate)
50sccm
(Power Density)
$0.095W/cm^2$

Note that a series of step including the first anisotropic etching, the first isotropic etching, the second anisotropic etching, and the second isotropic etching was performed without exposure to the atmosphere. That is, the number of times of etching was one.

(34) Peeling of Ag Mask

After the second isotropic etching, the substrate was immersed in Pure Etch Au100 (manufactured by Hayashi Pure Chemical Industries, Ltd) for 5 seconds to remove the Ag mask, thereby providing an unevenness layer. Thereafter, the base material was washed with pure water, and cleaning was performed with a UV ozone device (manufactured by Technovision Corporation) for 600 seconds.

The refractive index of the unevenness layer after peeling of the mask was as illustrated in the following table.

(4) Formation of High-Hardness Layer

After the Ag mask was peeled off, a high-hardness layer was formed on the formed unevenness layer.

Film -forming material: $Al_2O_3$ (manufactured by Canon Optron Inc., trade name: $Al_2O_3$).

Using a vacuum vapor deposition machine of Gener -1300 (manufactured by Optron Inc), the above film forming material was loaded and vapor deposition was performed at a film forming rate of 1 Å/sec to form a high-hardness layer having a thick 10 nm portion.

Substrate temperature: 160°C
Starting vacuum degree: $3.0 \times 10^{-3}P_a$
(Evaporation Source of Film-forming Material)
Electron gun

(5) Formation of slip-down layer

A slip-down layer was formed on the formed high-hardness layer.

Film forming material: $Ta_2O_5$ -$TiO_2$ (manufactured by Canon Optron, Inc., trade name: OA-600).

Using a vacuum vapor deposition machine Gener -1300 (manufactured by Optron Inc), the above film forming material was loaded and vapor deposition was performed at a film forming rate of 1 Å/sec to form a 2 nm thick sliding film.

Substrate temperature: 25°C
Starting vacuum degree: $3.0 \times 10^{-3}P_a$
(Evaporation Source of Film-forming Material)
Electron gun

(6) Formation of water-repellent layer

Subsequently, in the same apparatus, a water-repellent layer was formed on the formed slip-down layer.

(61) Application of Fluorine-Based Material

A fluorine-based material was applied onto the formed slip-down layer. A vacuum evaporator Gener - 1300 (manufactured by Optron Inc) was used, and the following film forming materials were loaded and vapor-deposited at a film forming rate of 1 Å/sec. The thickness of the fluorine-based material immediately after vapor deposition was 25 nm.

Film forming material: OPTOOL UD120 (manufactured by Daikin Industries, Ltd)
Substrate temperature: 25°C
Starting vacuum degree: $3.0 \times 10^{-3}P_a$
(Evaporation Source of Film-forming Material)
resistive heating

(62) Application of Silicon-Based Material

A silicon-based material was applied onto the applied fluorine-based material. A vacuum evaporator Gener -1300 (manufactured by Optron Inc) was used, and the following film forming materials were loaded and vapor-deposited at a film forming rate of 1 Å/sec. The thickness of the silicon-based material immediately after vapor deposition was 5 nm.

Note that when the silicon-based material was applied, the fluorine-based material applied earlier did not form a film and was in the form of a liquid containing a solvent.

Film forming material: OR-510 (manufactured by Canon Optron Inc)
Substrate temperature: 25°C
Starting vacuum degree: $3.0 \times 10^{-3} P_a$
(Evaporation Source of Film-forming Material)
resistive heating

Applying a fluorine-based material and a silicon-based material onto the slip-down layer; and, the substrate was dried at a temperature of 120°C for 12 hours to form a 30 nm portion of a water-repellent layer.
As described above, a function film 1 (optical component 1) was obtained.

2 Production of function films 2 to 13

function films (optical components) 2 to 11 were obtained by the same sequence as that for the function film 1 (optical component 1) except that the producing condition was changed to the following. The substrates of the optical components 7 and 8 were changed to the substrates shown in Table II. Production of the function films 12 and 13 was attempted.
function film 2: The same as the function film 1 except that the time of the first isotropic etching was changed to 400 s, the thicknesses of the fluorine-based material and the silicon-based material were changed to 10 nm and 10 nm, respectively.
function film 3: The same as function film 1 except that the fluorine-based material was 10 nm thick and the silicon-based material was 10 nm thick.
function film 4: The same as the function film 1 except that the time of the first isotropic etching was changed to 450 s.
function film 5: The same as the function film 1 except that the time of the first isotropic etching was changed to 550 s, the thicknesses of the fluorine-based material and the silicon-based material were changed to 10 nm and 15 nm, respectively.
function film 6: The same as the function film 1 except that the time of the first isotropic etching was changed to 400 s, the thicknesses of the fluorine-based material and the silicon-based material were changed to 5 nm and 7 nm, respectively.
function film 7: The main component of the unevenness layer was changed to SiC. The same as function film 1 except that the time of the first isotropic etching was changed to 400 s, the thicknesses of the fluorine-based material and the silicon-based material were changed to 25 nm and 5 nm, respectively.
function film 8: The main component of the unevenness layer was changed to Si. The same as function film 1 except that the time of the first isotropic etching was changed to 400 s, the thicknesses of the fluorine-based material and the silicon-based material were changed to 25 nm and 5 nm, respectively.
function film 9: after the first anisotropic etching, the first isotropic etching was not performed, and the Ag mask for the second stage was peeled off. Thereafter, an Ag mask for the first stage was formed, the second anisotropic etching was performed, then, the second isotropic etching was not performed, and the Ag mask for the first stage was peeled off. That is, two stages of the unevenness layer were formed without performing isotropic etching. The fluorine-based material was 25 nm thick, and the silicon-based material was 1 nm thick.
function film 10: The same as function film 9 except that the fluorine-based material was 1 nm thick and the silicon-based material was 10 nm thick.
function film 11: The number of stages of the unevenness layer was one. The high-hardness layer and the slip-down layer were not formed, and the water-repellent layer was formed of only one kind of water-repellent material. The thickness of the fluorine-based material was defined as 25 nm.

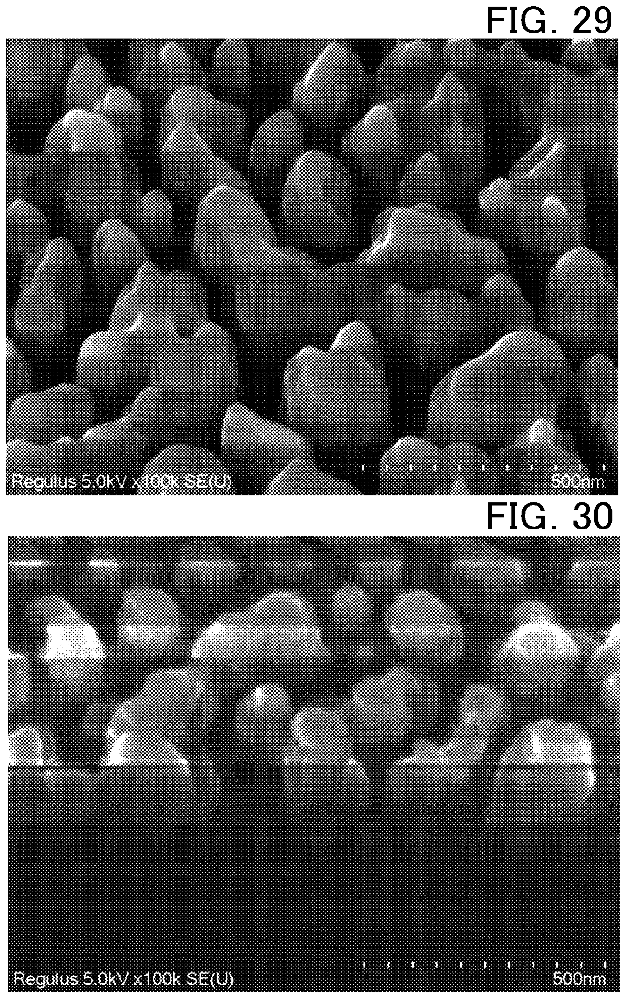

Fig. 28 is a photograph of the function film 1 when viewed from directly above. FIG. 29 is a photograph of the function film 1 viewed obliquely from above at an angle of 30 degrees. FIG. 30 is a photograph of the function film 9 as viewed obliquely from above at an angle of 45 degrees. As shown in FIG. 29, it can be seen that the uppermost stage (first stage) of the protruding portion is rounded at the tip end portion. Furthermore, as illustrated in Fig. 28, it is found that the uppermost stage (first stage) has an island-like structure and the lowermost stage (second stage) has a mesh-like structure.
The constitutions and producing conditions of the obtained function films (optical components) 1 to 11 are shown in the following Tables II to V Note that the unevenness layers of the obtained function films 1 to 10 all had a fine unevenness structure. The respective measurement items were measured by the above-described methods. The symbol "-" in the table represents that the corresponding layer is not formed.

In Table III, "major diameter/minor diameter" is the ratio of the major axis diameter to the minor axis diameter (major axis diameter/minor axis diameter) in each stage.

The term "unmeasurable" means that the major axis could not be defined and the ratio of the major axis diameter to the minor axis diameter could not be measured. Since the value of the radius of curvature R greatly differs depending on the measurement place in the upper stage (first stage), the radius of curvature R was measured at a plurality of places of 10 or more randomly selected places in the upper stage. This means that the minimum value measured for the function films 1 to 8 was 30 nm, and the maximum value was 1000 nm or 2000 nm. Furthermore, a larger radius of curvature R and a smaller taper angle $\theta_T$ mean a more rounded shape.

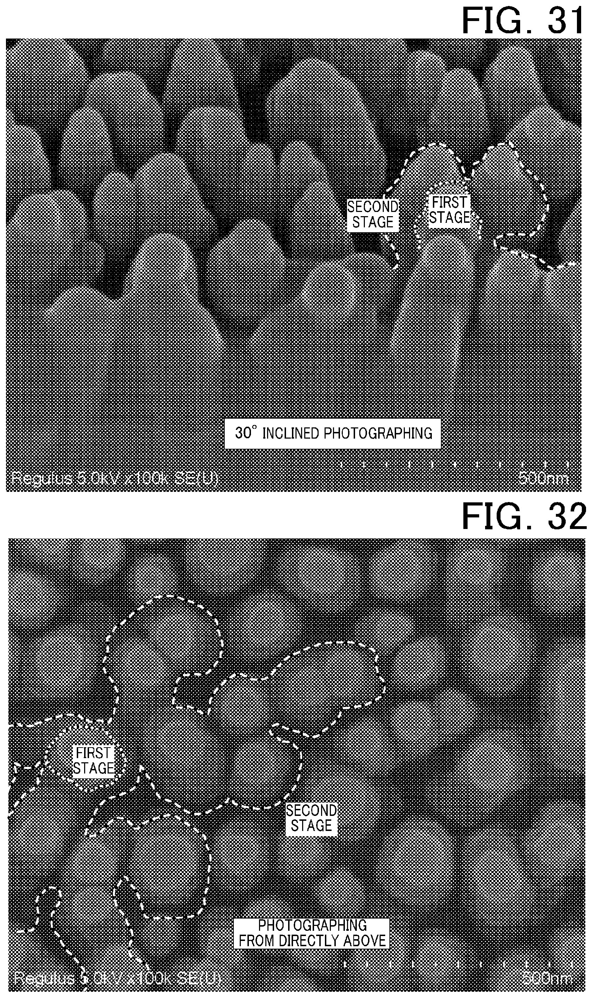

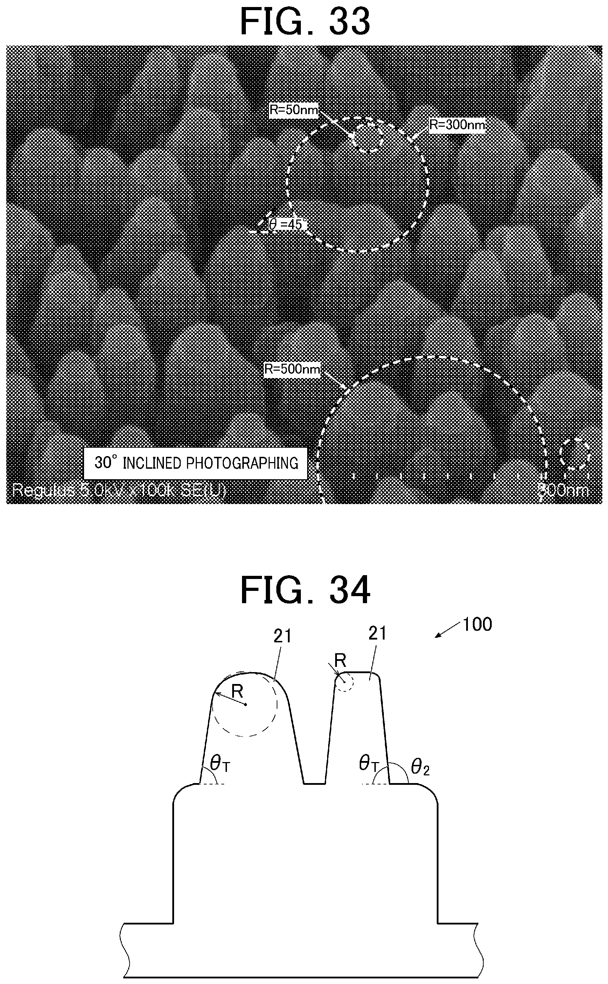

FIG. 31 is a photograph of the function film 1 as viewed obliquely from above at an angle of 30 degrees, and FIG. 32 is a photograph of the function film 1 as viewed from directly above. Figs. 31 and 32 illustrate outer shape of the first stage and the second stage. FIG. 33 is a photograph of the function film 1 as viewed obliquely from above at an angle of 30 degrees, and shows measurement points of the radius of curvature R and the taper angle $\theta_T$. Fig. 34 is a schematic diagram of a function film for explaining a radius of curvature R and a taper angle $\theta$ T.

In Table V, the "F/Si elemental ratio" represents the elemental ratio of fluorine (F) to silicon (Si) on the surface of the water-repellent layer. The elemental ratio was measured by X-ray photoelectron spectroscopy (XPS).

[Table 2]

TABLE II

| OPTICAL COMPONENT No. | FUNCTION FILM No. | SUBSTRATE | REFLECTANCE ADJUSTMENT LAYER | | REMARKS |
|---|---|---|---|---|---|
| | | | LOWER LAYER | UPPER LAYER | |
| 1 | 1 | TafD lens | $SiO_2$ | $AL_2O_3$ | PRESENT INVENTION |
| 2 | 2 | TafD lens | $SiO_2$ | $Al_2O_3$ | PRESENT INVENTION |
| 3 | 3 | TafD lens | $SiO_2$ | $Al_2O_3$ | PRESENT INVENTION |
| 4 | 4 | TafD lens | $SiO_2$ | $Al_2O_3$ | PRESENT INVENTION |
| 5 | 5 | TafD lens | $SiO_2$ | $Al_2O_3$ | PRESENT INVENTION |
| 6 | 6 | TafD lens | $SiO_2$ | $Al_2O_3$ | PRESENT INVENTION |
| 7 | 7 | SiC | $SiO_2$ | $Al_2O_3$ | PRESENT INVENTION |
| 8 | 8 | Si | $SiO_2$ | $Al_2O_3$ | PRESENT INVENTION |
| 9 | 9 | TafD lens | $SiO_2$ | $Al_2O_3$ | PRESENT INVENTION |
| 10 | 10 | TafD lens | $SiO_2$ | $Al_2O_4$ | PRESENT INVENTION |
| 11 | 11 | TafD lens | $SiO_2$ | $Al_2O_3$ | COMPARATIVE EXAMPLE |

[Table 3]

TABLE III

| OPTICAL OMPONENT No. | FUNCTION FILM No. | UNEVENNESS LAYER | | | | | FIRST ISOTROPIC ETCHING TIME[s] |
| --- | --- | --- | --- | --- | --- | --- | --- |
| | | MAIN COMPONENT | LOWER STAGE (SECOND STAGE) | UPPER STAGE (FIRST STAGE) | | | |
| | | | MAJOR DIAMETER /MINOR DIAMETER | MAJOR DIAMETER /MINOR DIAMETER | RADIUS OF CURVATURE R[nm] | TAPER ANGLE $\theta_T$ [DEGREES) | |
| 1 | 1 | $SiO_2$ | NOT MEASURABLE | 1.1 | 30-1000 | 45 | 700 |
| 2 | 2 | $SiO_2$ | NOT MEASURABLE | 4.2 | 30-2000 | 55 | 400 |
| 3 | 3 | $SiO_2$ | NOT MEASURABLE | 1.3 | 30-1000 | 45 | 700 |
| 4 | 4 | $SiO_2$ | NOT MEASURABLE | 3.2 | 30-2000 | 50 | 450 |
| 5 | 5 | $SiO_2$ | NOT MEASURABLE | 2.7 | 30-1000 | 50 | 550 |
| 6 | 6 | $SiO_2$ | 3.6 | 3.9 | 30-2000 | 55 | 400 |
| 7 | 7 | SiC | NOT MEASURABLE | 4.9 | 30-2000 | 55 | 400 |
| 8 | 8 | Si | NOT MEASURABLE | 2.3 | 30-1000 | 50 | 400 |
| 9 | 9 | $SiO_2$ | 5.6 | 2.9 | 10 | 80 | - |
| 10 | 10 | $SiO_2$ | 5.6 | 2.9 | 10 | 80 | - |
| 11 | 11 | $SiO_2$ | 1.0 | - | - | - | - |

[Table 4]

TABLE IV

| OPTICAL COMPONENT No. | FUNCTION FILM No. | HIGH-HARDNESS LAYER | | SUP-DOWN LAYER | REMARKS |
|---|---|---|---|---|---|
| | | MATERIAL | MOHS HARDNESS | MATERIAL | |
| 1 | 1 | $Al_2O_3$ | 12 | OA600 | PRESENT INVENTION |
| 2 | 2 | $Al_2O_3$ | 12 | OA600 | PRESENT INVENTION |
| 3 | 3 | $Al_2O_3$ | 12 | OA600 | PRESENT INVENTION |
| 4 | 4 | $Al_2O_3$ | 12 | OA600 | PRESENT INVENTION |
| 5 | 5 | $Al_2O_3$ | 12 | OA600 | PRESENT INVENTION |
| 6 | 6 | $Al_2O_3$ | 12 | OA600 | PRESENT INVENTION |
| 7 | 7 | $Al_2O_3$ | 12 | OA600 | PRESENT INVENTION |
| 8 | 8 | $Al_2O_3$ | 12 | OA600 | PRESENT INVENTION |
| 9 | 9 | $Al_2O_3$ | 12 | OA600 | PRESENT INVENTION |
| 10 | 10 | $Al_2O_3$ | 12 | OA600 | PRESENT INVENTION |
| 11 | 11 | - | - | - | COMPARATIVE EXAMPLE |

[Table 5]

TABLE V

| OPTICAL COMPONENT No. | FUNCTION FILM No. | WATER-REPELLENT LAYER | | | | F/Si ELEMENTAL RATIO | REMARKS |
|---|---|---|---|---|---|---|---|
| | | FIRST WATER-REPELLENT MATERIAL | | SECOND WATER-REPELLENT MATERIAL | | | |
| | | MATERIAL | THICKNESS [nm] | MATERIAL | THICKNESS [nm] | | |
| 1 | 1 | UD120 FLUORINE-BASED | 25 | OR-510 SILICON-BASED | 5 | 95:5 | PRESENT INVENTION |
| 2 | 2 | UD120 FLUORINE-BASED | 10 | OR-510 SILICON-BASED | 10 | 86:14 | PRESENT INVENTION |
| 3 | 3 | UD120 FLUORINE-BASED | 10 | OR-510 SILICON-BASED | 10 | 85:15 | PRESENT INVENTION |
| 4 | 4 | UD120 FLUORINE-BASED | 25 | OR-510 SILICON-BASED | 5 | 95:5 | PRESENT INVENTION |
| 5 | 5 | UD120 FLUORINE-BASED | 10 | OR-510 SILICON-BASED | 15 | 80:20 | PRESENT INVENTION |
| 6 | 6 | SC100 FLUORINE-BASED | 5 | OR-510 SILICON-BASED | 7 | 81:19 | PRESENT INVENTION |
| 7 | 7 | UD120 FLUORINE-BASED | 25 | OR-510 SIUCON-BASED | 5 | 95:5 | PRESENT INVENTION |
| 8 | 8 | UD120 FLUORINE-BASED | 25 | OR-510 SILICON-BASED | 5 | 95:5 | PRESENT INVENTION |
| 9 | 9 | UD120 FLUORINE-BASED | 25 | OR-510 SILICON-BASED | 1 | 99:1 | PRESENT INVENTION |
| 10 | 10 | UD120 FLUORINE-BASED | 1 | OR-510 SILICON-BASED | 10 | 50:50 | PRESENT INVENTION |
| 11 | 11 | UD120 FLUORINE-BASED | 25 | - | - | 100:0 | COMPARATIVE EXAMPLE |

(function film 12: comparative example)

An attempt was made to produce a function film 12 by changing the order of the application of the first water-repellent material (fluorine-based material) and the application of the second water-repellent material (silicon-based material). Note that the procedure was the same as that for the function film 1 except that the order of application of the water-repellent materials was changed, and the same sequence was used. In this case, only the fluorine-based material was exposed on the surface of the function film 12, and the silicon-based material was not exposed.

(function film 13: comparative example)

After applying and drying a first water-repellent material (fluorine-based material), the second water-repellent material (silicon-based material) was applied to try to produce the function film 13. Note that the sequence was the same as that for the function film 1 except that the fluorine-based material was applied and then dried. In this case, the silicon-based material was repelled on the film of the fluorine-based material, and the silicon-based material could not be applied onto the film of the fluorine-based material. Only the fluorine-based material was exposed on the surface of the finally obtained function film 13.

3. Evaluation

The obtained function film was subjected to the following evaluations. Note that the function film was not peeled off from the substrate, and the following evaluation was performed in a state of the optical component including the substrate, the reflectance adjustment layer, and the function film. Since the water contact angle and the slip-down angle were not affected by the substrate and the reflectance adjustment layer, they were evaluated as the function of the function film. Since the average light reflectance is influenced by the substrate and the reflectance adjustment layer, it was evaluated as the performance of the optical component.

(1) Water contact angle and slip-down angle before rubbing test (initial)

Using a contact angle measuring apparatus "G-1" (manufactured by Erma Co., Ltd), 10$\mu$L of pure water was dropped on the surface of the function film (the surface of the water-repellent layer) in an environment of 23°C and 50% RH. The static contact angle was measured 5 seconds after dropping, and this was taken as the water contact angle before the rubbing test. A water contact angle of 110 degrees or more was regarded as having no practical problem. Similarly, the slip-down angle was measured, and a slip-down angle of 60 degrees or less was determined to be practically acceptable.

(2) Water contact angle after rubbing test (after abrasion)

Three sheets of "BEMCOT (R) Clean Wipe P" (manufactured by Asahi Kasei Corporation) were taken out as the function film, wetted with water 1 ml by spraying, and abraded 100 times with a load of 50 g/cm$^2$. The abrasion treatment was performed by hand polishing while the weight was measured on a general electronic balance (rubbing test).

Thereafter, using a contact angle measuring device "G-1" (manufactured by Elma), 10 $\mu$L of pure water was dropped onto the surface of the function film (the surface of the water-repellent layer) under an environment of 23 °C and 50% RH. The static contact angle was measured 5 seconds after dropping, and this was taken as the water contact angle after the rubbing test. A difference (degradation) in water contact angle between before the rubbing test and after the rubbing test of 10 degrees or less or a water contact angle after the rubbing test of 135 degrees or more was determined to have no practical problem. Similarly, the slip-down angle was measured, and when it was 60 degrees or less, it was determined to have no problem in practical use.

(3) Average light reflectance

The average light reflectance of the optical component in the range of wavelength from 450 to 780 nm was measured using "USPM-RU", which is a micro-region spectral reflectance measuring device manufactured by Olympus Corporation. The obtained average reflectance was evaluated according to the following standard. A, AA, and AAA were determined to have no practical problem. Note that the optical component is composed of the substrate, the reflectance adjustment layer, and the function film as described above.

(standard)

AAA: The average light reflectance is 1.0% or less.
AA: The average light reflectance is more than 1.0% and 3.0% or less.

A: The average light reflectance is more than 3.0% and 5.0% or less.

Physical property of the obtained function films (optical components) 1 to 11 is shown in the following Table VI.

[Table 6]

TABLE VI

| OPTICAL COMPONENT No. | FUNCTION FILM No. | BEFORE RUBBING TEST | | AFTER RUBBING TEST | | AVERAGE LIGHT REFLECTANCE | REMARKS |
| --- | --- | --- | --- | --- | --- | --- | --- |
| | | CONTACT ANGLE [DEGREES] | SLIP-DOWN ANGLE [DEGREES] | CONTACT ANGLE [DEGREES] | SLIP-DOWN ANGLE [DEGREES] | | |
| 1 | 1 | 158 | 8 | 152 | 29 | 0.4 | PRESENT INVENTION |
| 2 | 2 | 149 | 20 | 143 | 28 | 0.8 | PRESENT INVENTION |
| 3 | 3 | 157 | 9 | 150 | 26 | 0.4 | PRESENT INVENTION |
| 4 | 4 | 152 | 18 | 145 | 30 | 0.7 | PRESENT INVENTION |
| 5 | 5 | 152 | 17 | 146 | 27 | 0.6 | PRESENT INVENTION |
| 6 | 6 | 149 | 22 | 142 | 34 | 0.7 | PRESENT INVENTION |
| 7 | 7 | 148 | 25 | 141 | 36 | 0.8 | PRESENT INVENTION |
| 8 | 8 | 149 | 24 | 143 | 36 | 0.6 | PRESENT INVENTION |
| 9 | 9 | 141 | 35 | 135 | 55 | 0.8 | PRESENT INVENTION |
| 10 | 10 | 135 | 45 | 132 | 55 | 0.7 | PRESENT INVENTION |
| 11 | 11 | 142 | 30 | 130 | 90 | 3.3 | COMPARATIVE EXAMPLE |

For the function film 12 and the function film 13 (comparative example), the evaluation results were at the same level as for the function film 11, that is, the performance after the rubbing test (after abrasion) deteriorated, posing a practical problem.

From the measurement result of the contact angle and the slip-down angle before the rubbing test, it is found that the function film of the present invention has high water repellency. In addition, from the measurement result of the contact angle and the slip-down angle after the rubbing test, it is found that the function film of the present invention has high rubbing resistance. In addition, it can be seen that the optical component of the present invention has a low average light reflectance.

It can be seen from the function films 1 and 7 to 8 that the water repellency is high both before and after the rubbing test because the unevenness layer contains $SiO_2$ as a main component. Furthermore, it is found from the optical components 1 and 7 to 8 that when the unevenness layer contains $SiO_2$ as a main component, the average light reflectance is low and the unevenness layer is suitable for an optical component.

It is understood from the function films 1, 9, and 10 that as the radius of curvature R is larger in the uppermost stage (first stage) of the unevenness layer, that is, as the tip end has a more rounded shape, both the abrasion resistance and the water repellency can be achieved. It is found that as the taper angle is smaller in the uppermost stage (first stage) of the unevenness layer, both the abrasion resistance and the water repellency can be achieved.

It is found that in the formation of the unevenness layer, the shape of each stage in the protruding portion can be adjusted by controlling the time of the first isotropic etching. The first isotropic etching time for the function film 3 is longer than that for the function film 2. Thus, the ratio of the major axis diameter to the minor axis diameter in the first stage is close to 1, and the corners of the pin angles are rounded off at the lower surface of the first stage (the upper surface of the second stage). As a result, it is found that in the function film 3, the contact angle is large and the slip-down angle is small, that is, the water repellency is enhanced both before and after the rubbing test, as compared with the function film 2.

By the above-embodiments, both rubbing resistance and water repellency of the function film can be achieved. In addition, in the optical component, the optical device, the inkjet head, and the mold which are provided with the function film, it is possible to achieve both the abrasion resistance and the water repellency.

Although the realization mechanism or action mechanism of the effects of the embodiments is not clear, there is infered the mechanism as follows.

In a thin film containing an inorganic substance as a main component, water repellency can be exhibited by forming a water-repellent layer containing a water-repellent material on the surface thereof. Further, by forming a fine unevenness structure on the surface, water repellency can be exhibited at a high level. On the other hand, when the surface of the fine unevenness structure is rubbed, the surface is easily abraded and the water-repellent layer is easily peeled off. This is due to the fact that when there is an acute angle in the fine structure, the portion is preferentially rubbed and the water repellent material is easily peeled off.

In the present embodiment, the first water-repellent material and the second water-repellent material are exposed on the surface of the water-repellent layer. That is, water deposited on the surface of the function film is affected by two or more kinds of water-repellent materials. The water repellency of the fluorine-based material serving as the first water-repellent material highly depends on the molecular orientation, and the water repellency of the silicon-based material serving as the second water-repellent material is less dependent on the molecular orientation in comparison with the fluorine-based material. When the surface of the water-repellent layer is rubbed, the degree of orientation of molecules is likely to decrease. Therefore, by containing the silicon-based material having a low dependency on the molecular orientation in addition to the fluorine-based material, it is possible to prevent the water repellency from being excessively lowered even when the surface of the water-repellent layer is rubbed. In addition, it is presumed that a structure having high abrasion resistance is obtained by eliminating an acute angle portion of the fine structure and providing a rounded shape or a tapered angle.

Although embodiments of the present disclosure have been described and illustrated in detail, the disclosed embodiments are made for purposes of illustration and example only and not limitation. The scope of the present disclosure should be interpreted by terms of the appended claims.

**Claims**

1. A function film (100) that is a water-repellent film, the function film comprising at least a water-repellent layer (34) and an unevenness layer (31), wherein

   the water-repellent layer has a surface on which a first water-repellent material and a second water-repellent material are exposed, and
   the unevenness layer contains an inorganic substance as a main component and has a fine unevenness structure.

2. The function film according to claim 1, wherein

in a vertical cross-sectional shape in a thickness direction of the unevenness layer, a protruding portion in the unevenness layer has a stepped shape with one stage or a plurality of stages, and
an uppermost stage of the protruding portion in the unevenness layer is rounded at a tip end portion.

3. The function film according to claim 1 or 2, wherein

in a vertical cross-sectional shape in a thickness direction of the unevenness layer, a protruding portion in the unevenness layer has a stepped shape with a plurality of stages, and
when the unevenness layer is viewed in top plan, an uppermost stage of the protruding portion in the unevenness layer includes an island-like structure and a lowermost stage of the protruding portion in the unevenness layer includes a mesh-like structure.

4. The function film according to claim 1 or 2, wherein the unevenness layer contains $SiO_2$ as a main component.

5. The function film according to claim 1 or 2, wherein

the first water-repellent material includes a fluorine-based material, and
the second water-repellent material includes a silicon-based material.

6. The function film according to claim 5, wherein an elemental ratio of fluorine to silicon on the surface of the water-repellent layer is within a range of 99:1 to 50:50.

7. The function film according to claim 1 or 2, further comprising a high-hardness layer (32) between the water-repellent layer and the unevenness layer, wherein
a hardness of the high-hardness layer is higher than a hardness of the unevenness layer.

8. The function film according to claim 7, wherein the high-hardness layer contains an inorganic substance having a Mohs hardness of 9 or more.

9. The function film according to claim 1 or 2, further comprising a slip-down layer (33) between the water-repellent layer and the unevenness layer.

10. The function film according to claim 1 or 2, wherein a contact angle of water at 23°C is 130 degrees or more.

11. A function film producing method for producing the function film according to claim 1 or 2, the method comprising:

unevenness layer forming that is forming the unevenness layer; and
water-repellent layer forming that is forming the water-repellent layer, wherein
the water-repellent layer forming includes:

first water-repellent material applying that is applying the first water-repellent material onto the unevenness layer; and
second water-repellent material applying that is applying the second water-repellent material onto the unevenness layer before a layer of the first water-repellent material is formed.

12. The function film producing method according to claim 11, wherein the unevenness layer forming includes rounding that is rounding corners of a plurality of protruding portions included in the fine unevenness structure.

13. An optical component comprising the function film according to claim 1 or 2.

14. An optical device comprising the optical component according to claim 13.

15. An inkjet head comprising the function film according to claim 1 or 2.

# FIG. 1

# FIG. 2

# FIG. 3

# FIG. 4

# FIG. 5

# FIG. 6

# FIG. 7

# FIG. 8

# FIG. 9

# FIG. 10

File  Edit  Image  Process  Analyze  Plugins  Window  Help

x=403, y=290, angle=0.34, length=167.00

File  Edit  Font

| value | count |
|-------|-------|
| 0 | 352791 |
| 1 | 0 |
| 2 | 0 |
| 3 | 0 |
| 4 | 0 |
| 5 | 0 |
| 6 | 0 |
| 7 | 0 |
| 8 | 0 |
| 9 | 0 |
| 10 | 0 |
| 11 | 0 |
| 12 | 0 |
| 13 | 0 |

S4800

0                                    255

List  Copy  Log  Live    value 76
                         count 0

# FIG. 11

File  Edit  Image  Process  Analyze  Plugins  Window  Help

x=403, y=290, angle=0.34, length=167.00

File  Edit  Font

| value | count |
|-------|-------|
| 242 | 0 |
| 243 | 0 |
| 244 | 0 |
| 245 | 0 |
| 246 | 0 |
| 247 | 0 |
| 248 | 0 |
| 249 | 0 |
| 250 | 0 |
| 251 | 0 |
| 252 | 0 |
| 253 | 0 |
| 254 | 0 |
| 255 | 876009 |

S4800

0                                    255

List  Copy  Log  Live

# FIG. 12

# FIG. 13

# FIG. 14

P1

1.5

1 [μm]

0.5

0

0          0.5          1          1.5

[μm]

# FIG. 15

127.45

[nm]

17.33

0                                                                                    1711.215

[nm]

# FIG. 16

137.33
120

[nm]

0.00

0                                        11.75%

# FIG. 17

P2

1.5

1 [μm]

0.5

0

0        0.5        1        1.5

[μm]

# FIG. 18

233.46

[nm]

91.27

0                                        1875.056

[nm]

# FIG. 19

# FIG. 20

# FIG. 21

# FIG. 22

# FIG. 23

Histogram of seikoAFM
300x240 pixels; RGB; 281K

| | |
|---|---|
| 0 | 255 |

Count: 262656     Min: 0
Mean: 105.161     Max: 255
StdDev: 125.528    Mode: 0(154338)

List    Copy    Log    Live

# FIG. 24

```
        ╭─────────────╮
        │    START    │
        ╰──────┬──────╯
               │
        ┌──────▼────────────┐  S1
        │ UNEVENNESS LAYER  │
        │ FORMING STEP      │
        └──────┬────────────┘
               │
        ┌──────▼────────────┐  S2
        │ HIGH-HARDNESS     │
        │ LAYER FORMING     │
        │ STEP              │
        └──────┬────────────┘
               │
        ┌──────▼────────────┐  S3
        │ SLIP-DOWN LAYER   │
        │ FORMING STEP      │
        └──────┬────────────┘
               │
        ┌──────▼────────────┐  S4
        │ WATER-REPELLENT   │
        │ LAYER FORMING     │
        │ STEP              │
        └──────┬────────────┘
               │
        ╭──────▼──────╮
        │     END     │
        ╰─────────────╯
```

# FIG. 25

```
        ╭─────────────╮
        │    START    │
        ╰──────┬──────╯
               │
        ┌──────▼────────────────┐  S41
        │ FIRST WATER-REPELLENT │
        │ MATERIAL APPLICATION  │
        │ STEP                  │
        └──────┬────────────────┘
               │
        ┌──────▼────────────────┐  S42
        │ SECOND WATER-REPELLENT│
        │ MATERIAL APPLICATION  │
        │ STEP                  │
        └──────┬────────────────┘
               │
        ╭──────▼──────╮
        │     END     │
        ╰─────────────╯
```

# FIG. 26

EP 4 718 125 A1

# FIG. 27

```
┌─────────────────┐
│      START      │
└─────────────────┘
         │
         ▼
┌─────────────────────────┐  S11
│  INORGANIC SUBSTANCE    │
│     FORMING STEP        │
└─────────────────────────┘
         │
         ▼
┌─────────────────────────┐  S12
│    MASK FORMING STEP    │
└─────────────────────────┘
         │
         ▼
┌─────────────────────────┐  S13
│      ETCHING STEP       │
└─────────────────────────┘
         │
         ▼
┌─────────────────────────┐  S14
│   MASK PEELING STEP     │
└─────────────────────────┘
         │
         ▼
┌─────────────────┐
│       END       │
└─────────────────┘
```

# FIG. 28

FIG. 29

FIG. 30

FIG. 31

SECOND STAGE

FIRST STAGE

30° INCLINED PHOTOGRAPHING

FIG. 32

FIRST STAGE

SECOND STAGE

PHOTOGRAPHING FROM DIRECTLY ABOVE

# FIG. 33

R=50nm
R=300nm
θ=45
R=500nm
30° INCLINED PHOTOGRAPHING
Regulus 5.0kV x100k SE(U)
300nm

# FIG. 34

**EP 4 718 125 A1**

## EUROPEAN SEARCH REPORT

Application Number

EP 25 20 3264

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/157557 A1 (KONICA MINOLTA INC [JP]) 2 August 2024 (2024-08-02) * paragraphs [0114], [0115], [0073], [0117], [0069], [0066], [0158], [0159]; figure 13B; table 1 * | 1-9, 11-15 | INV. G02B1/113 G02B1/115 G02B1/12 G02B1/14 G02B1/18 |
| X | JP 2016 071237 A (DAINIPPON PRINTING CO LTD) 9 May 2016 (2016-05-09) * paragraph [0099]; figure 1 * | 1,5,11 | |
| X | US 2013/319522 A1 (KOIKE JUN [JP] ET AL) 5 December 2013 (2013-12-05) * paragraphs [0172], [0067]; figure 7I * | 1,11 | |
| X | US 2024/308902 A1 (TADA KAZUNARI [JP]) 19 September 2024 (2024-09-19) * paragraphs [0245], [0249]; figure 2; table III * | 1,10,11 | |

**TECHNICAL FIELDS SEARCHED (IPC)**

G02B

The present search report has been drawn up for all claims

| Place of search | Date of completion of the search | Examiner |
|---|---|---|
| Munich | 12 February 2026 | Jones, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

49

## ANNEX TO THE EUROPEAN SEARCH REPORT
## ON EUROPEAN PATENT APPLICATION NO.

EP 25 20 3264

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | Publication date | Patent family member(s) | Publication date |
|---|---|---|---|
| WO 2024157557 A1 | 02-08-2024 | CN 120584399 A | 02-09-2025 |
| | | JP WO2024157557 A1 | 02-08-2024 |
| | | WO 2024157557 A1 | 02-08-2024 |
| JP 2016071237 A | 09-05-2016 | NONE | |
| US 2013319522 A1 | 05-12-2013 | BR 112013014167 A2 | 13-09-2016 |
| | | CN 103249562 A | 14-08-2013 |
| | | EP 2650124 A1 | 16-10-2013 |
| | | JP 5597263 B2 | 01-10-2014 |
| | | JP WO2012077738 A1 | 22-05-2014 |
| | | KR 20130080857 A | 15-07-2013 |
| | | MY 164197 A | 30-11-2017 |
| | | TW 201236872 A | 16-09-2012 |
| | | US 2013319522 A1 | 05-12-2013 |
| | | WO 2012077738 A1 | 14-06-2012 |
| US 2024308902 A1 | 19-09-2024 | CN 116981964 A | 31-10-2023 |
| | | EP 4300141 A1 | 03-01-2024 |
| | | JP 7722443 B2 | 13-08-2025 |
| | | JP WO2022181283 A1 | 01-09-2022 |
| | | US 2024308902 A1 | 19-09-2024 |
| | | WO 2022181283 A1 | 01-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5716679 B